# EUROPEAN PATENT SPECIFICATION

(11) **EP 3 165 010 B1**
(45) Date of publication and mention of the grant of the patent: **07.03.2018**
(21) Application number: 15747265.5
(22) Date of filing: 01.07.2015
(51) Int. Cl.: H04W 4/02, H04N 21/258, H04N 21/41, H04L 29/06, H04W 12/06, H04W 12/08, G06F 21/10, H04N 21/432, H04N 21/482

(54) **ACCESS ALLOCATION FOR A SHARED MEDIA OUTPUT DEVICE**
ZUGANGSERTEILUNG ZU EINER GEMEINSAM GENUTZTEN MEDIENAUSGABEVORRICHTUNG
ATTRIBUTION D'ACCÈS POUR UN DISPOSITIF DE SORTIE DE CONTENU MULTIMÉDIA PARTAGÉ

(30) Priority: 01.07.2014 US 201462019775 P; 29.06.2015 US 201514754095
(43) Date of publication of application: 10.05.2017
(73) Proprietor: Qualcomm Incorporated, San Diego, CA 92121-1714 (US)
(72) Inventor: CHOUDHURY, Sayeed Zaman, San Diego, California 92121-1714 (US)
(74) Representative: Tomkins & Co
(86) International application number: PCT/US2015/038825
(87) International publication number: WO 2016/004201

(56) References cited:
- US-A1- 2007 033 607
- US-A1- 2007 113 081
- US-A1- 2014 047 072

## Description

### CROSS-REFERENCE TO RELATED APPLICATION

The present Application for Patent claims the benefit of U.S. Provisional Application No. 62/019,775, entitled "ACCESS ALLOCATION FOR A SHARED MEDIA OUTPUT DEVICE," filed July 1, 2014, assigned to the assignee hereof.

### BACKGROUND OF THE INVENTION

Embodiments of the invention relate to access allocation for a shared media output device ("SMOD") and various methods and apparatuses related thereto.

Conventional shared media playlists enable multiple users to engage in cooperative selection of media for placement in the shared media playlist. In a basic configuration, a conventional shared media playlist permits a first user to obtain access to media associated with a second user. The first user can decide which media to access by browsing the second user's media, searching the second user's media, or accepting the second user's recommendation. Once the first user selects media associated with the second user, the first user can be added to the shared media playlist, and accessed by the first user.

In another conventional configuration, the multiple users can independently add media to the shared media playlist. The media can be associated with any one of the multiple users. The shared media playlist can be accessed on a user device associated with any one of the multiple users. A media server can be utilized to re-order the playlist based on shared preferences of the multiple users.

In yet another conventional configuration, the shared media playlist is associated with a shared media output device. The shared media playlist can be accessed on the shared media output device. A plurality of users associated with the shared media playlist can simultaneously access the media presented on the shared media playlist. // Insert page 1A here.

### SUMMARY

US2007/003607 A1 discloses that certain digital technology based consumer media devices such as personal video recorders have the ability to find and watch television shows, and/or automatically record programs of interest. The present disclosure provides systems and methods that allow a user to control the display, pausing or recording of programs based on the user's presence in, or proximity to, a program viewing area. Also disclosed are methods for controlling program display based on a priority or rank assigned to the users. The disclosed methods also allow users to control the programs that certain individuals see or hear, and in particular minor children.

US 2007/113081 A1 discloses a digital rights management (DRM) system and method based on device proximity for controlling what devices can utilize DRM protected content. DRM data and DRM protected content are copied from a first device to a second device such that the DRM protected content on the first device becomes locked out and the copied DRM protected content is not locked out on the second device. The first device periodically performs a proximity check between the first and second devices such that if the first and second devices are determined to be within a short range of one another the DRM lockout of the first device is disabled.

US2014/047072 A1 discloses that content which is related to content being displayed on an out-of-home display screen is synchronized with being shown on an out-of-home display screen. A mobile device operates to receive content which is related to the content being displayed on the out-of-home display screen. The system operates based on mobile device location, out-of-home display screen location and the time of day. Based on the time and locations, a server can determine what content is on the display screen and can therefore serve related content based on that to the mobile device. It works passively with periodic regular updates of the mobile device location or actively through the use of a button (touch screen, keyboard, etc.) on the mobile device to signal the server to check its location and therefore identifying which display screen the mobile device is near.

Techniques for allocating access to a shared media output device are disclosed.

The invention is defined by the subject matter of the appended independent claims.

In one example, a method for operating a control device is disclosed. The method may include, for example, determining that a first user equipment is in local proximity to a shared media output device, allocating, to the first user equipment, access to the shared media output device, and facilitating playback, on the shared media output device, of media content associated with the first user equipment so long as the first user equipment is determined to be in local proximity to the shared media output device.

In another example, a control device is disclosed. The apparatus may include, for example, a proximity determination device configured to determine that a first user equipment is in local proximity to a shared media output device, and a user equipment priority determination device configured to, allocate, to the first user equipment, access to the shared media output device, and facilitate playback, on the shared media output device, of media content associated with the first user equipment so long as the first user equipment is determined to be in local proximity to the shared media output device.

In another example, another apparatus for operating a control device is disclosed. The apparatus may include, for example, means for determining that a first user equipment is in local proximity to a shared media output device, means for allocating, to the first user equipment, access to the shared media output device, and means for facilitating playback, on the shared media output device, of media content associated with the first user equipment so long as the first user equipment is determined to be in local proximity to the shared media output device.

In another example, a non-transitory computer-readable medium comprising at least one instruction for causing a processor to perform processes for operating a control device is disclosed. The non-transitory computer-readable medium may include, for example, code for determining that a first user equipment is in local proximity to a shared media output device, code for allocating, to the first user equipment, access to the shared media output device, and code for facilitating playback, on the shared media output device, of media content associated with the first user equipment so long as the first user equipment is determined to be in local proximity to the shared media output device.

### BRIEF DESCRIPTION OF THE DRAWINGS

A more complete appreciation of embodiments of the invention and many of the attendant advantages thereof will be readily obtained as the same becomes better understood by reference to the following detailed description when considered in connection with the accompanying drawings which are presented solely for illustration and not limitation of the invention, and in which:
FIG. 1 illustrates a high-level system architecture of a wireless communications system in accordance with an embodiment of the invention.
FIG. 2 illustrates examples of user equipments (UEs) in accordance with embodiments of the invention.
FIG. 3 illustrates a communication device that includes logic configured to perform functionality in accordance with an embodiment of the invention.
FIG. 4 illustrates a server in accordance with an embodiment of the invention.
FIG. 5 generally illustrates a method of operating a control device in accordance with an embodiment of the invention.
FIG. 6 illustrates an exemplary system for implementing an embodiment of the invention.
FIG. 7 illustrates an exemplary data table for tracking data related to user equipment in accordance with an embodiment of the invention.
FIG. 8 illustrates an exemplary data table for tracking data related to media content in accordance with an embodiment of the invention.
FIG. 9 generally illustrates a method of determining proximity in accordance with an embodiment of the invention.
FIG. 10 generally illustrates a method of allocating access in accordance with an embodiment of the invention.
FIG. 11 generally illustrates a method of facilitating playback in accordance with an embodiment of the invention.

### DETAILED DESCRIPTION

Aspects of the invention are disclosed in the following description and related drawings directed to specific embodiments of the invention. Alternate embodiments may be devised without departing from the scope of the invention. Additionally, well-known elements of the invention will not be described in detail or will be omitted so as not to obscure the relevant details of the invention.

The words "exemplary" and/or "example" are used herein to mean "serving as an example, instance, or illustration." Any embodiment described herein as "exemplary" and/or "example" is not necessarily to be construed as preferred or advantageous over other embodiments. Likewise, the term "embodiments of the invention" does not require that all embodiments of the invention include the discussed feature, advantage or mode of operation.

Further, many embodiments are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, these sequence of actions described herein can be considered to be embodied entirely within any form of computer- readable storage medium having stored therein a corresponding set of computer instructions that upon execution would cause an associated processor to perform the functionality described herein. Thus, the various aspects of the invention may be embodied in a number of different forms, all of which have been contemplated to be within the scope of the claimed subject matter. In addition, for each of the embodiments described herein, the corresponding form of any such embodiments may be described herein as, for example, "logic configured to" perform the described action.

A client device, referred to herein as a user equipment (UE), may be mobile or stationary, and may communicate with a radio access network (RAN). As used herein, the term "UE" may be referred to interchangeably as an "access terminal" or "AT", a "wireless device", a "subscriber device", a "subscriber terminal", a "subscriber station", a "user terminal" or UT, a "mobile terminal", a "mobile station" and variations thereof. Generally, UEs can communicate with a core network via the RAN, and through the core network the UEs can be connected with external networks such as the Internet. Of course, other mechanisms of connecting to the core network and/or the Internet are also possible for the UEs, such as over wired access networks, WiFi networks (e.g., based on IEEE 802.11, etc.) and equivalents thereof. UEs can be embodied by any of a number of types of devices including but not limited to PC cards, compact flash devices, external or internal modems, wireless or wireline phones, and equivalents thereof. A communication link through which UEs can send signals to the RAN is called an uplink channel (e.g., a reverse traffic channel, a reverse control channel, an access channel, etc.). A communication link through which the RAN can send signals to UEs is called a downlink or forward link channel (e.g., a paging channel, a control channel, a broadcast channel, a forward traffic channel, etc.). As used herein the term traffic channel (TCH) can refer to either an uplink / reverse or downlink / forward traffic channel.

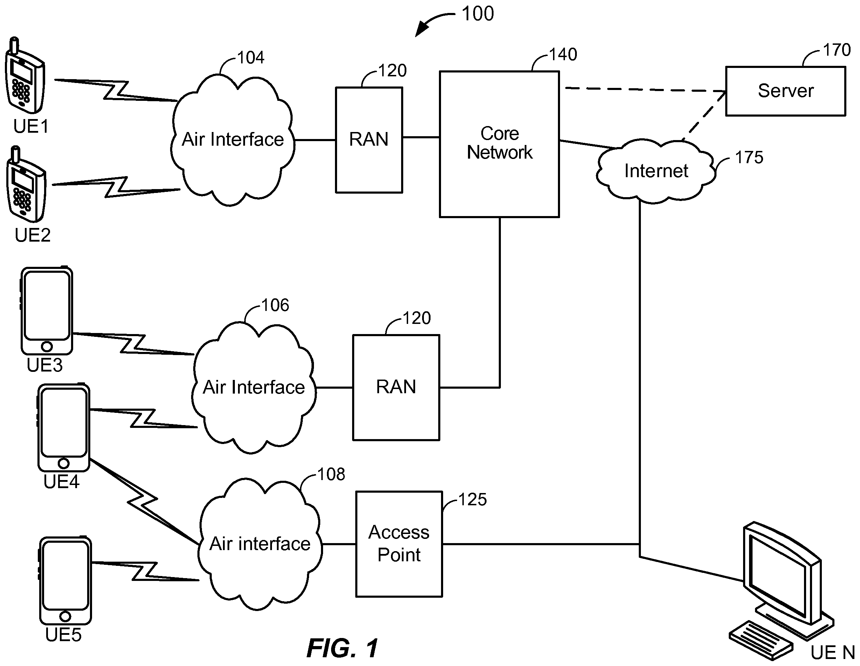

FIG. 1 illustrates a high-level system architecture of a wireless communications system 100 in accordance with an embodiment of the invention. The wireless communications system 100 contains UEs 1...N. The UEs 1...N can include cellular telephones, personal digital assistant (PDAs), pagers, a laptop computer, a desktop computer, and equivalents thereof. For example, in FIG. 1, UEs 1...2 are illustrated as cellular calling phones, UEs 3...5 are illustrated as cellular touchscreen phones or smart phones, and UE N is illustrated as a desktop computer or PC.

Referring to FIG. 1, UEs 1...N are configured to communicate with an access network (e.g., the RAN 120, an access point 125, etc.) over a physical communications interface or layer, shown in FIG. 1 as air interfaces 104, 106, 108 and/or a direct wired connection. The air interfaces 104 and 106 can comply with a given cellular communications protocol (e.g., CDMA, EVDO, eHRPD, GSM, EDGE, W-CDMA, LTE, etc.), while the air interface 108 can comply with a wireless IP protocol (e.g., IEEE 802.11). The RAN 120 includes a plurality of access points that serve UEs over air interfaces, such as the air interfaces 104 and 106. The access points in the RAN 120 can be referred to as access nodes or ANs, access points or APs, base stations or BSs, Node Bs, eNode Bs, and equivalents thereof. These access points can be terrestrial access points (or ground stations), or satellite access points. The RAN 120 is configured to connect to a core network 140 that can perform a variety of functions, including bridging circuit switched (CS) calls between UEs served by the RAN 120 and other UEs served by the RAN 120 or a different RAN altogether, and can also mediate an exchange of packet-switched (PS) data with external networks such as Internet 175. The Internet 175 includes a number of routing agents and processing agents (not shown in FIG. 1 for the sake of convenience). In FIG. 1, UE N is shown as connecting to the Internet 175 directly (i.e., separate from the core network 140, such as over an Ethernet connection of WiFi or 802.11-based network). The Internet 175 can thereby function to bridge packet-switched data communications between UE N and UEs 1...N via the core network 140. Also shown in FIG. 1 is the access point 125 that is separate from the RAN 120. The access point 125 may be connected to the Internet 175 independent of the core network 140 (e.g., via an optical communication system such as FiOS, a cable modem, etc.). The air interface 108 may serve UE 4 or UE 5 over a local wireless connection, such as IEEE 802.11 in an example. UE N is shown as a desktop computer with a wired connection to the Internet 175, such as a direct connection to a modem or router, which can correspond to the access point 125 itself in an example (e.g., for a WiFi router with both wired and wireless connectivity).

Referring to FIG. 1, a server 170 is shown as connected to the Internet 175, the core network 140, or both. The server 170 can be implemented as a plurality of structurally separate servers, or alternately may correspond to a single server. As will be described below in more detail, the server 170 is configured to support one or more communication services (e.g., Voice-over-Internet Protocol (VoIP) sessions, Push-to-Talk (PTT) sessions, group communication sessions, social networking services, etc.) for UEs that can connect to the server 170 via the core network 140 and/or the Internet 175, and/or to provide content (e.g., web page downloads) to the UEs.

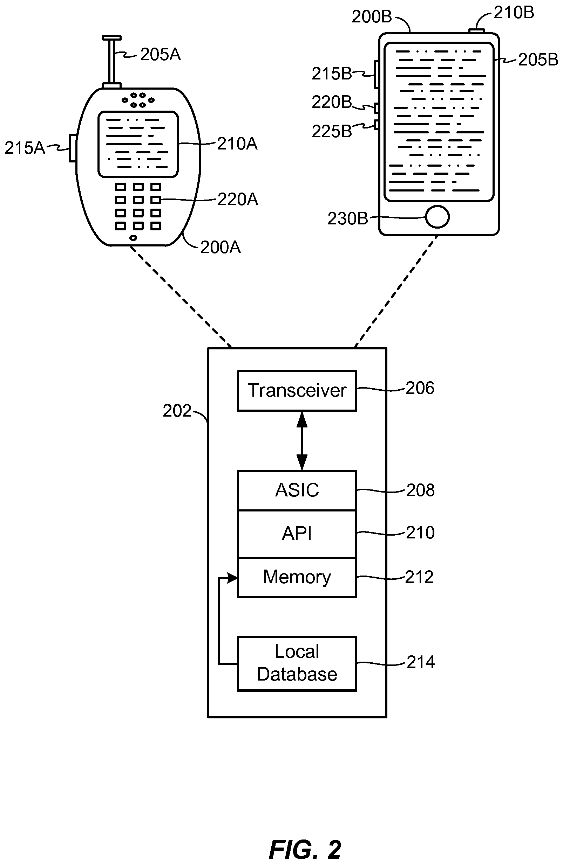

FIG. 2 illustrates examples of UEs (i.e., client devices) in accordance with embodiments of the invention. Referring to FIG. 2, UE 200A is illustrated as a calling telephone and UE 200B is illustrated as a touchscreen device (e.g., a smart phone, a tablet computer, etc.). As shown in FIG. 2, an external casing of UE 200A is configured with an antenna 205A, display 210A, at least one button 215A (e.g., a PTT button, a power button, a volume control button, etc.) and a keypad 220A among other components, as is known in the art. Also, an external casing of UE 200B is configured with a touchscreen display 205B, peripheral buttons 210B, 215B, 220B and 225B (e.g., a power control button, a volume or vibrate control button, an airplane mode toggle button, etc.), at least one front-panel button 230B (e.g., a Home button, etc.), among other components, as is known in the art. While not shown explicitly as part of UE 200B, the UE 200B can include one or more external antennas and/or one or more integrated antennas that are built into the external casing of UE 200B, including but not limited to WiFi antennas, cellular antennas, satellite position system (SPS) antennas (e.g., global positioning system (GPS) antennas), and equivalents thereof.

While internal components of UEs such as the UEs 200A and 200B can be embodied with different hardware configurations, a basic high-level UE configuration for internal hardware components is shown as platform 202 in FIG. 2. The platform 202 can receive and execute software applications, data, and/or commands transmitted from the RAN 120 that may ultimately come from the core network 140, the Internet 175 and/or other remote servers and networks (e.g., application server 170, web URLs, etc.). The platform 202 can also independently execute locally stored applications without RAN interaction. The platform 202 can include a transceiver 206 operably coupled to an application specific integrated circuit (ASIC) 208, or other processor, microprocessor, logic circuit, or other data processing device. The ASIC 208, or other processor, executes the application programming interface (API) layer 210 that interfaces with any resident programs in the memory 212 of the UEs 200A and 200B. The memory 212 can be comprised of read-only or random-access memory (RAM and ROM), EEPROM, flash cards, or any memory common to computer platforms. The platform 202 also can include a local database 214 that can store applications not actively used in memory 212, as well as other data. The local database 214 is typically a flash memory cell, but can be any secondary storage device as known in the art, such as magnetic media, EEPROM, optical media, tape, soft or hard disk, or the like.

Accordingly, an embodiment of the invention can include a UE (e.g., UE 200A, 200B, etc.) including the ability to perform the functions described herein. As will be appreciated by those skilled in the art, the various logic elements can be embodied in discrete elements, software modules executed on a processor or any combination of software and hardware to achieve the functionality disclosed herein. For example, the ASIC 208, memory 212, API layer 210 and local database 214 may all be used cooperatively to load, store and execute the various functions disclosed herein and thus the logic to perform these functions may be distributed over various elements. Alternatively, the functionality could be incorporated into one discrete component. Therefore, the features of the UEs 200A and 200B in FIG. 2 are to be considered merely illustrative and the invention is not limited to the illustrated features or arrangement.

The wireless communication between the UEs 200A and/or 200B and the RAN 120 can be based on different technologies, such as CDMA, W-CDMA, time division multiple access (TDMA), frequency division multiple access (FDMA), Orthogonal Frequency Division Multiplexing (OFDM), GSM, or other protocols that may be used in a wireless communications network or a data communications network. As discussed in the foregoing and known in the art, voice transmission and/or data can be transmitted to the UEs from the RAN using a variety of networks and configurations. Accordingly, the illustrations provided herein are not intended to limit the embodiments of the invention and are merely to aid in the description of aspects of embodiments of the invention.

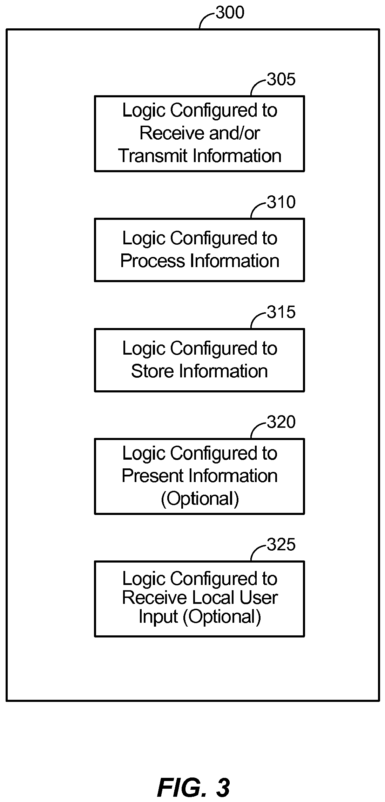

FIG. 3 illustrates a communication device 300 that includes logic configured to perform functionality. The communication device 300 can correspond to any of the above-noted communication devices, including but not limited to UEs 200A or 200B, any component of the RAN 120, any component of the core network 140, any components coupled with the core network 140, and/or the Internet 175 (e.g., the server 170), and equivalents thereof. Thus, the communication device 300 can correspond to any electronic device that is configured to communicate with (or facilitate communication with) one or more other entities over the wireless communications system 100 of FIG. 1.

Referring to FIG. 3, the communication device 300 includes logic configured to receive and/or transmit information 305. In an example, if the communication device 300 corresponds to a wireless communications device (e.g., UE 200A or 200B, access point 125, a BS, Node B or eNodeB in the RAN 120, etc.), the logic configured to receive and/or transmit information 305 can include a wireless communications interface (e.g., Bluetooth, WiFi, 2G, CDMA, W-CDMA, 3G, 4G, LTE, etc.) such as a wireless transceiver and associated hardware (e.g., an RF antenna, a MODEM, a modulator and/or demodulator, etc.). In another example, the logic configured to receive and/or transmit information 305 can correspond to a wired communications interface (e.g., a serial connection, a USB or Firewire connection, an Ethernet connection through which the Internet 175 can be accessed, etc.). Thus, if the communication device 300 corresponds to some type of network-based server (e.g., server 170, etc.), the logic configured to receive and/or transmit information 305 can correspond to an Ethernet card, in an example, that connects the network-based server to other communication entities via an Ethernet protocol. In a further example, the logic configured to receive and/or transmit information 305 can include sensory or measurement hardware by which the communication device 300 can monitor its local environment (e.g., an accelerometer, a temperature sensor, a light sensor, an antenna for monitoring local RF signals, etc.). The logic configured to receive and/or transmit information 305 can also include software that, when executed, permits the associated hardware of the logic configured to receive and/or transmit information 305 to perform its reception and/or transmission function(s). However, the logic configured to receive and/or transmit information 305 does not correspond to software alone, and the logic configured to receive and/or transmit information 305 relies at least in part upon hardware to achieve its functionality.

Referring to FIG. 3, the communication device 300 further includes logic configured to process information 310. In an example, the logic configured to process information 310 can include at least a processor. Example implementations of the types of processing that can be performed by the logic configured to process information 310 include, but is not limited to, performing determinations, establishing connections, making selections between different information options, performing evaluations related to data, interacting with sensors coupled to the communication device 300 to perform measurement operations, converting information from one format to another (e.g., between different protocols such as .wmv to .avi, etc.), and equivalents thereof. For example, the processor included in the logic configured to process information 310 can correspond to a general purpose processor, a digital signal processor (DSP), an ASIC, a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. The logic configured to process information 310 can also include software that, when executed, permits the associated hardware of the logic configured to process information 310 to perform its processing function(s). However, the logic configured to process information 310 does not correspond to software alone, and the logic configured to process information 310 relies at least in part upon hardware to achieve its functionality.

Referring to FIG. 3, the communication device 300 further includes logic configured to store information 315. In an example, the logic configured to store information 315 can include at least a non-transitory memory and associated hardware (e.g., a memory controller, etc.). For example, the non-transitory memory included in the logic configured to store information 315 can correspond to RAM memory, flash memory, ROM memory, EPROM memory, EEPROM memory, registers, hard disk, a removable disk, a CD-ROM, or any other form of storage medium known in the art. The logic configured to store information 315 can also include software that, when executed, permits the associated hardware of the logic configured to store information 315 to perform its storage function(s). However, the logic configured to store information 315 does not correspond to software alone, and the logic configured to store information 315 relies at least in part upon hardware to achieve its functionality.

Referring to FIG. 3, the communication device 300 further optionally includes logic configured to present information 320. In an example, the logic configured to present information 320 can include at least an output device and associated hardware. For example, the output device can include a video output device (e.g., a display screen, a port that can carry video information such as USB, HDMI, etc.), an audio output device (e.g., speakers, a port that can carry audio information such as a microphone jack, USB, HDMI, etc.), a vibration device and/or any other device by which information can be formatted for output or actually outputted by a user or operator of the communication device 300. For example, if the communication device 300 corresponds to UE 200A or UE 200B as shown in FIG. 2, the logic configured to present information 320 can include the display 210A of UE 200A or the touchscreen display 205B of UE 200B. In a further example, the logic configured to present information 320 can be omitted for certain communication devices, such as network communication devices that do not have a local user (e.g., network switches or routers, remote servers such as the server 170, etc.). The logic configured to present information 320 can also include software that, when executed, permits the associated hardware of the logic configured to present information 320 to perform its presentation function(s). However, the logic configured to present information 320 does not correspond to software alone, and the logic configured to present information 320 relies at least in part upon hardware to achieve its functionality.

Referring to FIG. 3, the communication device 300 further optionally includes logic configured to receive local user input 325. In an example, the logic configured to receive local user input 325 can include at least a user input device and associated hardware. For example, the user input device can include buttons, a touchscreen display, a keyboard, a camera, an audio input device (e.g., a microphone or a port that can carry audio information such as a microphone jack, etc.), and/or any other device by which information can be received from a user or operator of the communication device 300. For example, if the communication device 300 corresponds to UE 200A or UE 200B as shown in FIG. 2, the logic configured to receive local user input 325 can include the keypad 220A, any of the buttons 215A or 210B through 225B, the touchscreen display 205B, etc. In a further example, the logic configured to receive local user input 325 can be omitted for certain communication devices, such as network communication devices that do not have a local user (e.g., network switches or routers, remote servers such as the server 170, etc.). The logic configured to receive local user input 325 can also include software that, when executed, permits the associated hardware of the logic configured to receive local user input 325 to perform its input reception function(s). However, the logic configured to receive local user input 325 does not correspond to software alone, and the logic configured to receive local user input 325 relies at least in part upon hardware to achieve its functionality.

Referring to FIG. 3, while the configured logics of 305 through 325 are shown as separate or distinct blocks in FIG. 3, it will be appreciated that the hardware and/or software by which the respective configured logic performs its functionality can overlap in part. For example, any software used to facilitate the functionality of the configured logics of 305 through 325 can be stored in the non-transitory memory associated with the logic configured to store information 315, such that the configured logics of 305 through 325 each performs their functionality (i.e., in this case, software execution) based in part upon the operation of software stored by the logic configured to store information 315. Likewise, hardware that is directly associated with one of the configured logics can be borrowed or used by other configured logics from time to time. For example, the processor of the logic configured to process information 310 can format data into an appropriate format before being transmitted by the logic configured to receive and/or transmit information 305, such that the logic configured to receive and/or transmit information 305 performs its functionality (i.e., in this case, transmission of data) based in part upon the operation of hardware (i.e., the processor) associated with the logic configured to process information 310.

Generally, unless stated otherwise explicitly, the phrase "logic configured to" as used throughout this disclosure is intended to invoke an embodiment that is at least partially implemented with hardware, and is not intended to map to software-only implementations that are independent of hardware. Also, it will be appreciated that the configured logic or "logic configured to" in the various blocks are not limited to specific logic gates or elements, but generally refer to the ability to perform the functionality described herein (either via hardware or a combination of hardware and software). Thus, the configured logics or "logic configured to" as illustrated in the various blocks are not necessarily implemented as logic gates or logic elements despite sharing the word "logic." Other interactions or cooperation between the logic in the various blocks will become clear to one of ordinary skill in the art from a review of the embodiments described below in more detail.

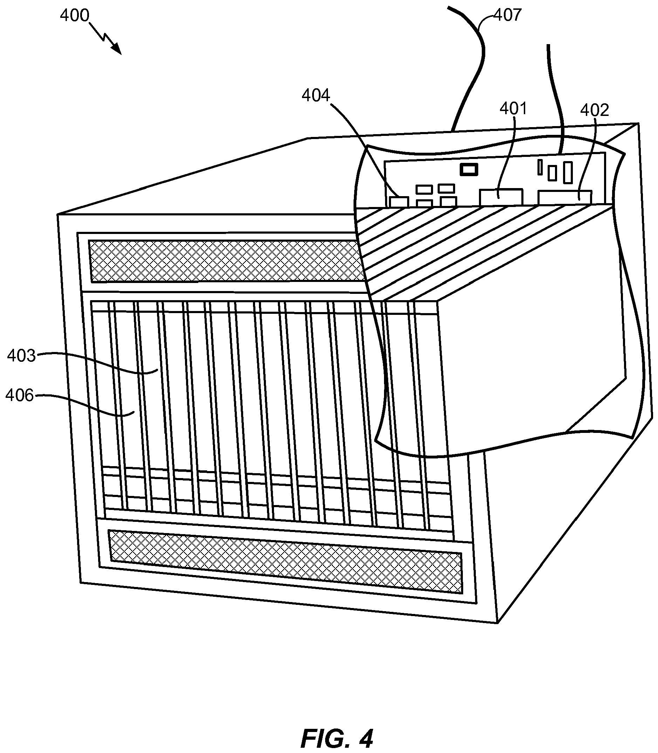

The various embodiments may be implemented on any of a variety of commercially available server devices, such as server 400 illustrated in FIG. 4. In an example, the server 400 may correspond to one example configuration of the server 170 described above. In FIG. 4, the server 400 includes a processor 401 coupled to volatile memory 402 and a large capacity nonvolatile memory, such as a disk drive 403. The server 400 may also include a floppy disc drive, compact disc (CD) or DVD disc drive 406 coupled to the processor 401. The server 400 may also include network access ports 404 coupled to the processor 401 for establishing data connections with a network 407, such as a local area network coupled to other broadcast system computers and servers or to the Internet. In context with FIG. 3, it will be appreciated that the server 400 of FIG. 4 illustrates one example implementation of the communication device 300, whereby the logic configured to receive and/or transmit information 305 corresponds to the network access ports 404 used by the server 400 to communicate with the network 407, the logic configured to process information 310 corresponds to the processor 401, and the logic configuration to store information 315 corresponds to any combination of the volatile memory 402, the disk drive 403 and/or the disc drive 406. The optional logic configured to present information 320 and the optional logic configured to receive local user input 325 are not shown explicitly in FIG. 4 and may or may not be included therein. Thus, FIG. 4 helps to demonstrate that the communication device 300 may be implemented as a server, in addition to a UE implementation as in 200A or 200B as in FIG. 2.

Conventional shared media playlists enable multiple users to engage in cooperative selection of media for placement in the shared media playlist. In a basic configuration, a conventional shared media playlist permits a first user to obtain access to media associated with a second user. The first user can decide which media to access by browsing the second user's media, searching the second user's media, or accepting the second user's recommendation. Once the first user selects media associated with the second user, the first user can be added to the shared media playlist, and accessed by the first user.

In another conventional configuration, the multiple users can independently add media to the shared media playlist. The media can be associated with any one of the multiple users. The shared media playlist can be accessed on a user device associated with any one of the multiple users. A media server can be utilized to re-order the playlist based on shared preferences of the multiple users.

In yet another conventional configuration, the shared media playlist is associated with a shared media output device. The shared media playlist can be accessed on the shared media output device. A plurality of users associated with the shared media playlist can simultaneously access the media presented on the shared media playlist.

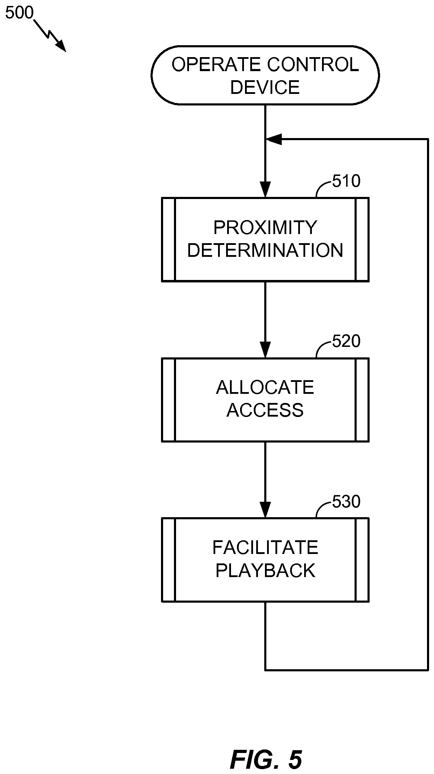

FIG. 5 generally illustrates a high-level method 500 of operating a control device in accordance with an embodiment of the invention. At 510, the control device determines how many UEs are in a proximity zone and attempts to identify the UEs that are in the proximity zone. At 520, the control device receives or obtains UE data concerning at least one specific UE, for example, UE 200A, UE 200B, or the like. Based on the UE data, the control device may allocate, to the at least one specific UE, access to a shared media output device. At 530, the control device facilitates playback of specific media content (e.g., audio and/or video) on behalf of the at least one specific UE in accordance with the access allocation of 520. In an example, the control device can correspond to the shared media output device, one of the proximate UEs, a remote server or a remote UE. Accordingly, if the control device is the shared media output device, the playback can be facilitated by directly playing the media content on behalf of the at least one specific UE. In another example, if the control device is the proximate UE, remote server, or remote UE, the playback can be facilitated by streaming the media content to the shared media output device for playback, directing some other device to stream the media content to the shared media output device for playback or signaling the shared media output device that playback for the media content is permitted whereby the shared media output device is relied upon to acquire the media content on its own.

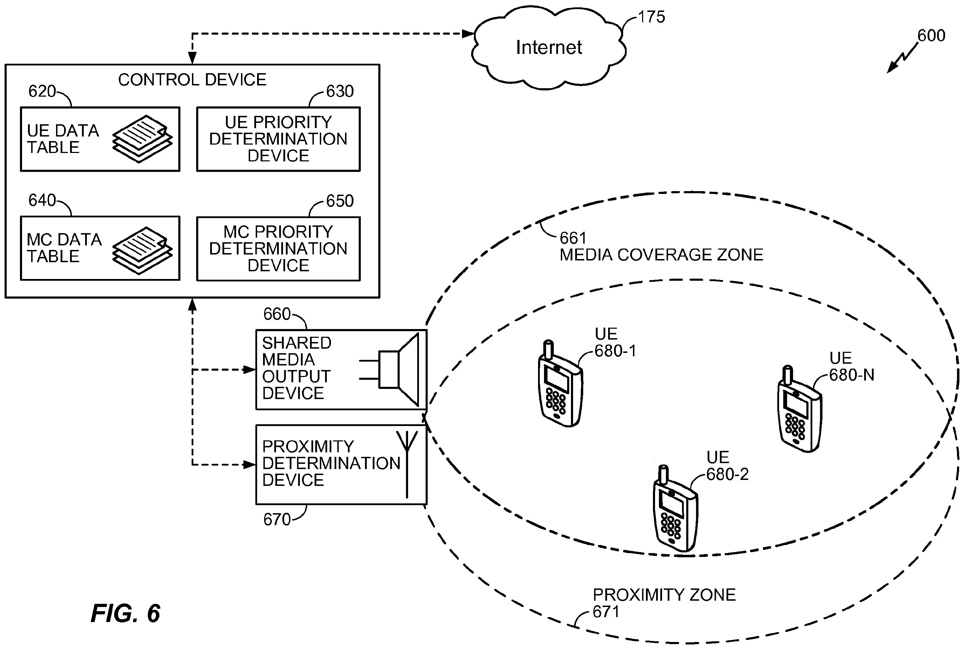

FIG. 6 generally illustrates a system 600 comprising a control device 610 similar to communication device 300, server 400, or the like. The control device 610 may be configured to track UE data, which may be used to allocate access by associated UEs to the shared media output device. The UE data may be stored in a UE data table 620. The control device 610 may also be configured to assign different UE priority statuses to a plurality of different UEs so that access can be conveniently allocated. The different UE priority statuses may be determined by a UE priority determination device 630. The control device 610 may also be configured to track data relating to media content (hereinafter "MC data") which may be used to facilitate playback of the MC data. The MC data may be stored in a MC data table 640. The control device 610 may also be configured to assign different MC priority statuses to different media content so as to facilitate prioritized playback of the MC data. The MC priority status of a given unit of MC data may be determined by a MC priority determination device 650.

The system 600 may further comprise a shared media output device ("SMOD") 660 and a proximity determination device ("PDD") 670. The SMOD 660 is associated with a media coverage zone 661, which is defined as an area in which persons are expected to be able to be in range of the media content output by the SMOD 660 (e.g., for a video presentation, the media coverage zone 661 can correspond to area in which a screen of the SMOD 660 can be viewed, for an audio presentation, the media coverage zone 661 can be an area in which audio is expected to be received at a given decibel level, and equivalents thereof). The PDD 670 is likewise associated with a proximity zone 671, which is defined as an area in which the presence of one or more UEs 680-1, 680-2... 680-N (referred to generally as UEs 680) can be identified (e.g., whereby N is an integer greater than or equal to 3). Although in FIG. 6, the media coverage zone 661 partially overlaps the proximity zone 671, it will be understood that the media coverage zone 661 may wholly subsume the proximity zone 671, or vice-versa.

The control device 610 facilitates playback of media content on the SMOD 660. The media content is delivered to the shared media output device by one or more of downloading requested media content from the first user equipment, downloading the requested media content from a cloud content service, streaming the requested media content from the first user equipment, or streaming the requested media content from a cloud content service. The PDD 670 may obtain and process UE data and/or MC data and relay it to the control device 610. The UE data and/or MC data may be obtained from one or more of the UEs 680. The UEs 680 may be similar to UE 200A, UE 200B, or the like. In an example, the control device 610 can optionally be connected to the Internet 175, from which media content, UE data and/or MC data may be obtained and or used to deliver the MC data to the SMOD 660. Alternatively, the control device 610 may be a device that locally controls the SMOD 660 or can even correspond to the SMOD 660 itself, in which case the Internet 175 connection is not strictly necessary, although still possible for the purpose of acquiring media content, MC data and/or UE data, and equivalents thereof.

Although FIG. 6 illustrates control device 610, UE data table 620, UE priority determination device 630, MC data table 640, MC priority determination device 650, SMOD 660, PDD 670, and UEs 680-1, 680-2... 680-N as distinct elements, it will be understood that any subset of these elements can be combined into a single device. Overall, the elements that make up system 600 may be combined into one or more devices similar to the communication device 300, server 400, or the like. The elements that make up system 600 may also be divided into sub-elements similar to the communication device 300, server 400, or the like. Moreover, the control device 610, UE data table 620, MC data table 640, MC priority determination device 650, SMOD 660, PDD 670, UEs 680-1, 680-2... 680-N, and any sub-elements thereof, may communicate with one another in accordance with any known communication protocol. Although a discrete number of specific interconnections are shown between various elements, it will be understood that any number of interconnections are possible between any of the various elements or sub-elements identified above. For example, one or more of the UEs 680-1, 680-2... 680-N may be connected to the control device 610 directly or indirectly, such as, for example, via the Internet 175 or the PDD 670. In one possible scenario, each of the above elements is provided on one of the individual UEs 680. In another possible scenario, the individual UEs 680-1, 680-2... 680-N are distinct elements, but the remainder of the elements are provided on the control device 610 (e.g., the PDD 670 and/or the control device 610 are implemented within the SMOD 660, etc.). In another possible scenario, the control device 610, UE data table 620, UE priority determination device 630, MC data table 640, and MC priority determination device 650 are provided remotely while the SMOD 660 and PDD 670 are provided locally as a single device. In yet another possible scenario, the SMOD 660 and PDD 670 are provided locally as a single device having a docking station (not shown) for receiving at least one individual UE such as UE 680-1, and the control device 610, UE data table 620, UE priority determination device 630, MC data table 640, and MC priority determination device 650 are provided on UE 680-1, and equivalents thereof. The system 600 may be implemented as software application that is present on a number of devices, any of which may act as, for example, the control device 610, SMOD 660, or PDD 670. Additionally, the software application implementation of system 600 may be embedded as a software development kit (SDK) into a pre-existing audio software application.

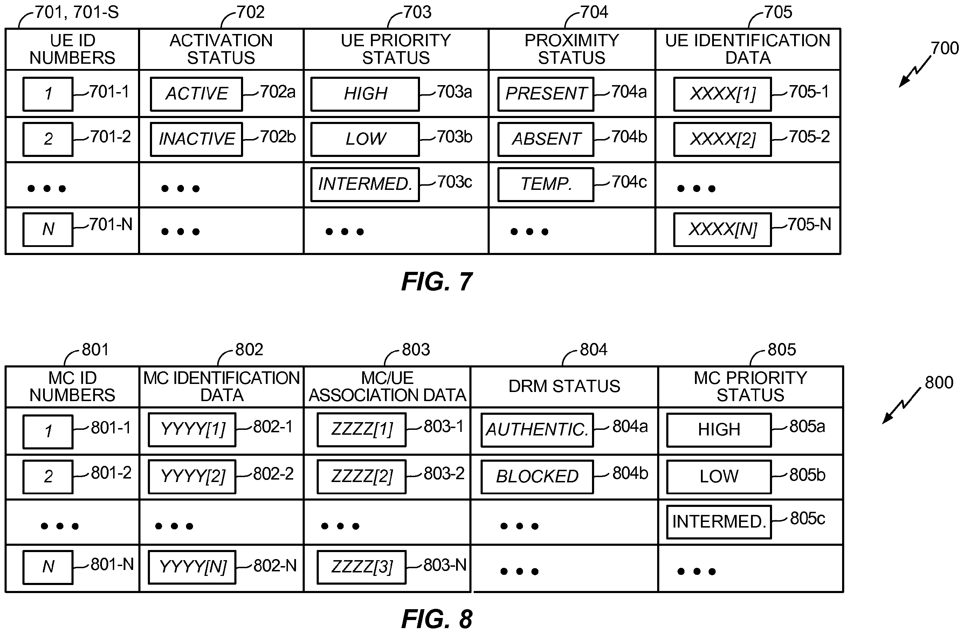

As generally illustrated in FIG. 7, a UE data table 700 is used to track UE identification numbers ("UE IDs") 1... N (e.g., whereby N is an integer greater than or equal to 3). The UE IDs may be referred to individually as UE ID 701-1, UE ID 701-2, UE ID 701-N, *etc.,* or generally as UE IDs 701. Creation and modification of the UE data table 700 may be facilitated by a control device such as, for example, control device 610. Each UE ID 701 may be associated with a unique UE. Each UE ID 701 is associated with UE identification data 705 as well an activation status 702, a UE priority status 703, and/or a proximity status 704.

The activation status 702 may be a simple binary indication of an active status 702a or an inactive status 702b. The UE priority status 703 may contain a hierarchy including, for example, a high-priority UE status 703a and a low-priority UE status 703b. Any number of intermediate-priority UE statuses 703c are also possible, and in some aspects the UE priority status 703 may include a weighting factor or coefficient that fits within a wide range of potential priority statuses. The proximity status 704 may be a simple binary determination such as, for example, a present status 704a or an absent status 704b. Other proximity statuses are also possible, such as for example, a temporarily absent status 704c.

The UE data table 700 may store UE identification data 705 that enables the control device 610 to identify an association between a proximate UE and a unique UE ID 701-1. The UE identification data 705 may comprise any identifying UE-specific information. For example, the UE identification data 705 can include an account number, subscriber identifier, a user identity, an online user identity, an online user account, etc., from which the control device 610 can verify the media content to which the respective proximate UE is permitted access. The control device 610 may obtain the UE identification data 705 using any of a variety of methods. In one possible scenario, the control device 610 receives an identifying signal transmitted from a UE 680-1, which is subsequently processed and provided to the UE data table 700 as UE identification data 705-1. Additionally or alternatively, the control device 610 may transmit a signal to a UE 680-1 which prompts the UE 680-1 to send an identifying signal (which is likewise processed and provided to the UE data table 700 as UE identification data 705). In either case, the signals may be transmitted directly, via a network, a social network, a subscription service, or the Internet. If UE identification data 705 is stored locally, the control device 610 may obtain the UE identification data 705 from local storage. If UE identification data 705 is available elsewhere, the control device 610 may obtain the UE identification data 705 from a network, a social network, a subscription service, or the Internet.

In one possible scenario, an application module and/or data associated with an application module is stored on a UE 680-1. The application may be, for example, a streaming content service. In response to a prompt from the control device 610, or alternatively, without prompting, the UE 680-1 may transmit UE identification data 705 to the control device 610 that indicates a unique subscriber identifier for the streaming content service. As a result, the control device 610 is enabled to access the streaming content service associated with the unique subscriber identifier. In this scenario, any data which enables control device 610 to access the streaming content service associated with the unique subscriber identifier may be stored as UE identification data 705. UE identification data 705 may also include any data which enables control device 610 to identify UE 680-1 and/or associate the streaming content, streaming content service, and/or unique subscriber identifier with UE 680-1. While the UE IDs 701 are illustrated in FIG. 7 as being separate from the UE identification data 705, in another embodiment a single unified UE ID data field can be implemented. For example, the unified UE ID data field can correspond to a list of MAC addresses of each proximate UE from which the media content permissions of each proximate UE can be looked up.

The UE data table 700, or any portion thereof, may be automatically updated on an intermittent basis. Additionally or alternatively, the UE data table 700, or any portion thereof, may be updated in an event-triggered manner, such as whenever a change is detected in the activation status 702, UE priority status 703, proximity status 704, or UE identification data 705. Additionally or alternatively, the UE data table 700 may be accessed and modified manually, for example, updated by an administrator.

The following example, with accompanying tables, is provided for illustrative purposes. In one scenario, a resident of a home who is planning a party can create a list of potential guests using, for example, the control device 610. The potential guest or list of potential guests may be input manually by an administrator; derived from a network, a social network, a subscription service, or the Internet; and/or copied from a previously-submitted list of potential guests. In one possible scenario, the potential guests may of their own volition add other potential guests. If UE identification data 705 is already stored in the UE data table 700, then each potential guest added to the list may already be associated with one or more UE IDs 701. The control device 610 may be configured to verify or update UE identification data 705 via a network, a social network, a subscription service, or the Internet. If UE identification data 705 is not already stored in the UE data table 700, the control device 610 may be configured to obtain the UE identification data 705 in any of the ways set forth in the present disclosure.

According to the example, an activation status 702 for each associated UE ID 701 may be manually set by the administrator, or automatically set to a default status. The default status may be, for example, an active status 702a or an inactive status 702b. In one possible scenario, every UE ID 701 is initially set to an inactive status 702b. A trigger may shift the activation status 702 associated with any given UE ID 701 into an active status 702a.

In one possible example, with reference to Table 1, an administrator submits a list of three potential guests. The control device 610 creates a unique UE ID 701 for each potential guest ("1", "2", and "3" respectively) in the UE data table 700. The control device 610 sets the activation status 702 for each UE ID to an inactive status 702b ("INACTIVE"), which, according to this example, is a default setting. The control device 610 also stores UE identification data 705 ("XXXX[1]", "XXXX[2]", and "XXXX[3]", respectively) which is useful for associating the newly created UE IDs "1", "2", and "3" with a respective UE, a UE identification signal, a UE communication protocol, a user identity, an online user identity, or an online user account, and relatedly, the MC data to which each respective UE is permitted access:

**Table 1**

| **UE ID** | **Activation Status** | **UE Priority Status** | **Proximity Status** | **UE Identification Data** |
|---|---|---|---|---|
| **1** | **INACTIVE** | **N/A** | **N/A** | **XXXX[1]** |
| **2** | **INACTIVE** | **N/A** | **N/A** | **XXXX[2]** |
| **3** | **INACTIVE** | **N/A** | **N/A** | **XXXX[3]** |

In this example, the control device 610 is further configured to send electronic invitations to each of the guests. The invitations may be sent directly to the UEs 680 associated with each of the respective guests, or sent to the guests via a network, a social network, a subscription service, or the Internet. If the control device 610 receives an acceptance of the invitation, or RSVP, the UE ID 701 associated with an invited guest may be shifted from an inactive status 702b to an active status 702a. Table 2 reflects a scenario where the guests associated with UE IDs "1" and "3" have accepted the invitation. The respective activation statuses 702 for each of UE ID "1" and "3" have accordingly been shifted to "ACTIVE".

**Table 2**

| **UE ID** | **Activation Status** | **UE Priority Status** | **Proximity Status** | **UE Identification Data** |
|---|---|---|---|---|
| **1** | **ACTIVE** | **N/A** | **N/A** | **XXXX[1]** |
| **2** | **INACTIVE** | **N/A** | **N/A** | **XXXX[2]** |
| **3** | **ACTIVE** | **N/A** | **N/A** | **XXXX[3]** |

Moreover, in some configurations, the invitations sent by the control device 610 include a request for additional UE identification data 705, for example, data that will enable the control device 610 to specifically recognize the guest's UE when the guest's UE enters the proximity zone 671. In some examples, UE identification data 705 can include device-identifying information (e.g., a UE-specific SSID, a MAC address associated with the guest's UE, etc.). Further, the UE identification data 705 is not necessarily limited to device-identifying hardware parameters such as an SSID or MAC address, but could also encompass information that identifies application-layer information associated with the UE. For example, a middleware layer of a software framework can broadcast application-layer information such as a multicast DNS advertisement, which can be used as part of the UE identification data 705. In one possible scenario, the guest associated with UE ID "3" provides such data, and UE identification data "XXXX[3]" is updated accordingly. As a result, when the guest arrives at the party, the PDD 670 will recognize that a UE 680 is present, and the control device 610 will be able to specifically recognize that newly-arrived UE 680 is associated with UE ID "3". In other configurations, the invitation will additionally or alternatively include instructions that will enable the guest's UE to self-identify upon entry into the proximity zone 671 (e.g., by broadcasting a UE-identifying SSID beacon, etc.).

Additionally or alternatively, a shift to active status 702a may be contingent upon a shift in the proximity status 704 of the associated UE ID 701, for example, from an absent status 704b to a present status 704a. Additionally or alternatively, the control device 610 may receive a signal from a UE 680 associated with a given UE ID 701 in which the UE 680 requests a shift to active status 702a. The control device 610 may also send a signal to the UE 680 prompting the user to make such a request. The control device 610 may automatically grant a request to shift into active status 702a, or may prompt an administrator to grant such a request.

According to the example, a UE priority status 703 for each UE ID 701 may be manually set by an administrator, or automatically set to a default status, for example, a high-priority UE status 703a or a low-priority UE status 703b. Additionally or alternatively, the UE priority status 703 can be derived from a network, a social network, a subscription service, or the Internet, and/or copied from a previously-input list of potential guests. Any number of intermediate-priority UE statuses 703c are also possible, and in some aspects the UE priority status 703 may include of a weighting factor or coefficient that fits within a wide range of potential priority statuses. In one possible scenario, an administrator may set a UE priority status 703 associated with his or her personal UE ID 701 to be a high-priority UE status 703a. In another possible scenario, a UE priority status 703 may be set or modified by a UE priority determination device such as, for example, UE priority determination device 630. Table 3 reflects a scenario where the control device 610 has set a UE priority status 703 for each UE ID to a low-priority UE status 703b, which is a default setting.

**Table 3**

| **UE ID** | **Activation Status** | **UE Priority Status** | **Proximity Status** | **UE Identification Data** |
|---|---|---|---|---|
| **1** | **ACTIVE** | **LOW** | **N/A** | **XXXX[1]** |
| **2** | **INACTIVE** | **LOW** | **N/A** | **XXXX[2]** |
| **3** | **ACTIVE** | **LOW** | **N/A** | **XXXX[3]** |

When one or more guests arrive, according to the example, a proximity determination device such as, for example, PDD 670 may detect their respective arrivals in accordance with one or more of the methods set forth in this application. In one possible scenario, the guest associated with UE ID "3" has already provided data that enables control device 610 to specifically recognize the guest's UE 680 when the guest's UE 680 enters the proximity zone 671(in an above-mentioned scenario, such data was requested in the guest's invitation). When the data was provided to the control device 610, the control device 610 updated the UE identification data 705 associated with the guest's UE ID 701. In Table 4, the updated UE identification data 705-3 is shown as "XXXX[3]^", where the "^" symbol represents updated data. Table 4 reflects a scenario where control device 610 uses updated UE identification data "XXXX[3]^" to determine that the UE 680 detected by the PDD 670 is associated with preexisting UE ID 3. The control device 610 accordingly shifts the proximity status 704 associated with UE ID 3 to a present status 704a.

**Table 4**

| **UE ID** | **Activation Status** | **UE Priority Status** | **Proximity Status** | **UE Identification Data** |
|---|---|---|---|---|
| **1** | **ACTIVE** | **LOW** | **N/A** | **XXXX[1]** |
| **2** | **INACTIVE** | **LOW** | **N/A** | **XXXX[2]** |
| **3** | **ACTIVE** | **LOW** | **PRESENT** | **XXXX[3] ^** |

In another possible scenario, the PDD 670 recognizes that a UE 680 is present, but cannot ascertain a matching UE ID 701 associated with the UE because sufficient UE identification data 705 is absent from the UE data table 700. In this scenario, the control device 610 will attempt to obtain updated UE identification data 705 in accordance with one or more of the methods identified in the present disclosure and repeat the process of ascertaining a UE ID 701 that is associated with the detected UE 680. Table 5 reflects a scenario where PDD 670 recognizes the presence of an unidentified UE 680, and control device 610 obtains updated UE identification data 705 from the unidentified UE 680 itself, or from some other source. The updated UE identification data 705 indicates that the newly-detected UE 680 is associated with preexisting UE ID "1". As shown in Table 5, the control device 610 accordingly stores the UE identification data 705 (represented as "XXXX[1]^") and shifts the proximity status 704 associated with UE ID "1" to a present status 704a.

**Table 5**

| **UE ID** | **Activation Status** | **UE Priority Status** | **Proximity Status** | **UE Identification Data** |
|---|---|---|---|---|
| **1** | **ACTIVE** | **LOW** | **PRESENT** | **XXXX[1]^** |
| **2** | **INACTIVE** | **LOW** | **N/A** | **N/A** |
| **3** | **ACTIVE** | **LOW** | **PRESENT** | **XXXX[3] ^** |

In a further scenario, the PDD 670 once again recognizes that a UE 680 is present, but cannot ascertain a matching UE ID 701 associated with the UE because sufficient UE identification data 705 is absent from the UE data table 700. Once again, the control device 610 will attempt to obtain updated UE identification data 705 in accordance with one or more of the methods identified in the present disclosure and repeat the process of ascertaining a matching UE ID 701. Table 6 reflects a scenario where the PDD 670 recognizes the presence of an unidentified UE 680, and control device 610 obtains UE identification data 705 from the unidentified UE 680 itself, or from some other source. The UE identification data 705 indicates that the newly-detected UE 680 is not associated with any preexisting UE ID 701. Therefore, control device 610 arbitrarily assigns a new UE ID 701 to the newly-detected UE and adds a new UE ID, for example, "4", to the UE data table 700. The control device 610 also creates and/or stores new UE identification data 705 (represented as "XXXX[4]^") that will enable the control device 610 to recognize the association between the newly-detected UE 680 and UE ID "4" in the future. The control device 610 shifts the proximity status 704 associated with UE ID "4" to a present status 704a. Control device 610 also assigns a default activation status 702 and UE priority status 703, in this example, "INACTIVE" and "LOW", respectively.

**Table 6**

| **UE ID** | **Activation Status** | **UE Priority Status** | **Proximity Status** | **UE Identification Data** |
|---|---|---|---|---|
| **1** | **ACTIVE** | **LOW** | **PRESENT** | **XXXX[1]^** |
| **2** | **INACTIVE** | **LOW** | **N/A** | **N/A** |
| **3** | **ACTIVE** | **LOW** | **PRESENT** | **XXXX[3]^** |
| **4** | **INACTIVE** | **LOW** | **PRESENT** | **XXXX[4]^** |

In some of the aforementioned scenarios, invited guests who RSVP'd (i.e., accepted the invitations) were shifted to an active status 702a. In such scenarios, it can be inferred that a UE 680 associated with newly-added UE ID "4" belongs to an 'uninvited guest'. In some configurations, a newly-detected UE 680 associated with an 'uninvited guest' may be, by default, shifted to an active status 702a by the control device 610.

However, in the scenario reflected by Table 6 above, the default activation status 702 is an inactive status 702b. In the scenario of Table 6, the control device 610 may be further configured to determine whether it is necessary to update the activation status 702 associated with UE ID "4". In one possible example, the control device 610 validates the UE 680 associated with UE ID "4". Validation may entail prompting the user of the UE 680 associated with UE ID "4" to enter a password via the UE 680 or the control device 610, and/or prompting an administrator to manually update the UE data table 700. Table 7 reflects a scenario where an administrator validates the newly-detected UE 680 associated with UE ID "4", thereby assigning an "ACTIVE" status. Moreover, to further illustrate the example, the administrator recognizes that the uninvited guest is a person of high-priority, for example, a popular local DJ or VIP, and accordingly instructs control device 610 to shift the UE priority status 703 associated with UE ID "4" to a high-priority UE status 703a.

**Table 7**

| **UE ID** | **Activation Status** | **UE Priority Status** | **Proximity Status** | **UE Identification Data** |
|---|---|---|---|---|
| **1** | **ACTIVE** | **LOW** | **PRESENT** | **XXXX[1]^** |
| **2** | **INACTIVE** | **LOW** | **N/A** | **N/A** |
| **3** | **ACTIVE** | **LOW** | **PRESENT** | **XXXX[3]^** |
| **4** | **ACTIVE** | **HIGH** | **PRESENT** | **XXXX[4]^** |

Although Table 7 reflects a scenario in which the activation status 702 and UE priority status 703 are shifted simultaneously by an administrator, it should be understood that activation status 702 and UE priority status 703 are wholly independent variables and may be shifted in accordance with any method set forth in the present disclosure. Moreover, the UE priority status 703 may be created or modified by a UE priority determination device such as, for example, the UE priority determination device 630.

When one or more guests leave, according to the example, the PDD 670 may detect their respective departures in accordance with one or more of the methods set forth in this application. In one possible scenario, the control device 610 recognizes that the UE associated with UE ID "3" is no longer present and shifts the associated proximity status 704 to an absent status 704b. In another possible scenario, reflected in Table 8 below, the control device 610 recognizes that the UE 680 associated with UE ID "3" is no longer present and shifts the associated proximity status 704 to a temporarily absent status 704c.

**Table 8**

| **UE ID** | **Activation Status** | **UE Priority Status** | **Proximity Status** | **UE Identification Data** |
|---|---|---|---|---|
| **1** | **ACTIVE** | **LOW** | **PRESENT** | **XXXX[1]** |
| **2** | **INACTIVE** | **LOW** | **N/A** | **N/A** |
| **3** | **ACTIVE** | **LOW** | **TEMP.** | **XXXX[3]** |
| **4** | **ACTIVE** | **HIGH** | **PRESENT** | **XXXX[4]** |

If the UE associated with UE ID 3 remains undetected by the PDD 670 for a given period of time after shifting to a temporarily absent status 704c, the control device 610 may again shift the proximity status 704, this time to an absent status 704b. Table 9 reflects this scenario.

**Table 9**

| **UE ID** | **Activation Status** | **UE Priority Status** | **Proximity Status** | **UE Identification Data** |
|---|---|---|---|---|
| **1** | **ACTIVE** | **LOW** | **PRESENT** | **XXXX[1]** |
| **2** | **INACTIVE** | **LOW** | **N/A** | **N/A** |
| **3** | **ACTIVE** | **LOW** | **ABSENT** | **XXXX[3]** |
| **4** | **ACTIVE** | **HIGH** | **PRESENT** | **XXXX[4]** |

The period of time in which a temporarily absent status 704c prevails may be derived from a default setting of the control device 610, manually input by the administrator of the control device 610, or set to be dynamic in accordance with any number of factors, including a total number of UE IDs 701, a total number of UE IDs 701 in an active status 702a, and/or a total number of UE IDs 701 in a present status 704a. The period of time may also be linked to any variable in a MC data table 800, described below, or any activity performed by the SMOD 660, for example, a number of units of media content played back. If a UE 680 associated with a temporarily absent status 704c re-enters the proximity zone 671, the proximity status 704 associated with the UE 680 may be shifted back to a present status 704a.

As generally illustrated in FIG. 8, the MC data table 800 may be used to track MC identification numbers ("MC IDs") 1...N (e.g., where N is an integer that is greater than or equal to 3), 801. Creation and modification of the MC data table 800 may be facilitated by a control device such as, for example, control device 610. Each MC ID 801 may be associated with a unique unit of media content. Each MC ID 801-1, 801-2... 801-N may further be associated with MC identification data 802 (for example, 802-1, 802-2... 802-N), MC/UE association data 803 (for example, 803-1, 803-2... 803-N), as well as data on a digital rights management ("DRM") status 804 and a MC priority status 805.

The DRM status 804 may be a simple binary indication of an authenticated status 804a or a blocked status 804b. The control device 610 may ensure that playback of media content on the SMOD 660 is facilitated only if the media content's unique MC ID 801 is associated with an authenticated status 804a.

The MC data table 800 may store MC identification data 802 that enables the control device 610 to link extant media content to a unique MC ID 801. The MC identification data 802 comprises any information that enables the control device 610 to identify an association between two or more of the MC ID 801, a specific unit of media content, a link to a specific unit of media content or media content stream, or a specific media content tag or identifier. The control device 610 may obtain the MC identification data 802 directly from a specific unit of media content. If the MC identification data 802 is stored locally, the control device 610 may obtain the MC identification data 802 from local storage. If the MC identification data 802 is available elsewhere, the control device 610 may obtain the data from a network, a social network, a subscription service, or the Internet.

The MC data table 800 may store MC/UE association data 803 that enables the control device 610 to link a specific MC ID 801 to one or more UE IDs 701. In one possible scenario, the one or more UE IDs 701 identified by the MC/UE association data 803 compose a subset 701-S that includes all UE IDs 701 that have acquired, reserved, or linked to media content associated with a specific MC ID 801.

The MC data table 800 may be automatically updated on an intermittent basis. Additionally or alternatively, the MC data table 800 or any portion thereof may be updated in an event-triggered manner, such as whenever a change is detected in the MC identification data 802, MC/UE association data 803, DRM status 804, and/or MC priority status 805. Additionally or alternatively, the MC data table 800 can be accessed and modified manually, for example, updated by an administrator.

In one example, a resident of a home who is planning a party can submit a list of extant media content to the control device 610. The media content may be acquired, reserved, or linked to in accordance with any number of methods. In some aspects, an administrator manually inputs media content and/or links to media content into the control device 610; streams, records, or copies the media content from a network, a social network, subscription service and/or the Internet; bookmarks specific media content for streaming, recording, or copying via a network, social network, subscription service and/or the Internet; copies media content or links to media content from local storage; and/or bookmarks media content for playback or streaming from local storage. In some aspects, the media content may be acquired, reserved, or linked not only by an administrator, but by any UE 680-1, 680-2... 680-N associated with a unique UE ID 701. In yet other aspects, these methods are performed by some, but not all, UEs 680 associated with a unique UE ID 701, for example, only by UEs 680 with an active status 702a, a high-priority UE status 703a, and/or a present status 704a, or some other combination of statuses. Regardless of how the media content is acquired, reserved, or recognized, the control device 610 may attempt to link the media content to a unique MC ID 801. If MC identification data 802 is already stored in the MC data table 800, then submitted media content will already be associated with an MC ID 801. The control device 610 may be configured to verify or update the MC identification data 802 via a network, a social network, a subscription service, or the Internet. If the MC identification data 802 is not already stored in the MC data table 800, the control device may be configured to obtain the MC identification data 802 in any of the ways set forth in the present disclosure.

According to the example, the MC/UE association data 803 links a specific MC ID 801-1 to one or more of the UE IDs 701. The one or more UE IDs 701 identified by the MC/UE association data 803 compose a subset 701-S. In one possible scenario, media content associated with a unique MC ID 801a is submitted to the control device 610. If the submitted media content is acquired, reserved, or linked to by an administrator, the MC/UE association data 803 may comprise data that links the unique MC ID 801a to the UE ID 701 associated with the administrator. If, on the other hand, the media content is acquired, reserved, or linked to via UE 680-N, the MC/UE association data 803 may comprise data that links the unique MC ID 801a to the UE ID 701 associated with UE 680-N.

In one possible scenario, the MC/UE association data 803 may further comprise data that indicates whether the UE 680-N associated with the UE ID 701 has authority and/or authorization to play back the submitted media content. In some scenarios, authorization can only be granted by a third party, such as, for example, a copyright holder or licensee. The MC/UE association data 803 may further comprise data that indicates how and/or how often the authority and/or authorization are to be verified. The control device 610 may be configured to utilize the MC/UE association data 803 to verify that the UE 680-N has authority and/or authorization to play back the linked media content. Additionally or alternatively, the control device 610 may be configured to prompt the UE 680-N to supply the MC/UE association data 803 necessary for such verification. In another possible scenario, the control device 610 will determine which, if any, other UEs 680 have authority and/or authorization to play back the linked media content. The MC/UE association data 803 may comprise data that links the MC ID 801a to a subset 701-S of UE IDs 701, all of which have authority and/or authorization to play back the linked media content. The control device 610 may be configured to restrict the subset 701-S to UE IDs 701 with an active status 702a, a high-priority UE status 703a, and/or a present status 704a, or some other combination of statuses. The MC/UE association data 803 may be automatically updated on an intermittent basis. Additionally or alternatively, the MC/UE association data 803 may be updated upon an update to UE data table 700, MC data table 800, or any component thereof.

According to the example, the DRM status 804 may, by default, be shifted to a blocked status 804b. The control device 610 may utilize MC/UE association data 803 to determine whether to shift from a blocked status 804b to an authenticated status 804a, or vice-versa. In one possible scenario, MC/UE association data 803 indicates a link between a given MC ID 801a and a subset 701-S of one or more UE IDs 701, each of which is authorized to play back the media content associated with the MC ID 801a. The control device 610 may look to UE data table 700 to determine if at least one UE ID 701 from the subset 701-S has a present status 704a. If at least one UE ID 701 in the subset 701-S has a present status 704a, the control device 610 may shift the DRM status 804 associated with the MC ID 801a to an authenticated status 804a. If, on the other hand, each UE ID 701 in the subset 701-S is associated an absent status 704b, the control device 610 may shift the DRM status 804 associated with the MC ID 801a to a blocked status 804b. The DRM status 804 may be automatically updated on an intermittent basis. Additionally or alternatively, the DRM status 804 may be updated upon an update to UE data table 700, MC data table 800, or any component thereof. In one possible scenario, updating of DRM status 804 is linked to any shift in a proximity status 704 of any UE ID 701.

According to the example, a MC priority status 805 for each MC ID 801 may be manually set by an administrator, or automatically set to a default status, for example, a high-priority MC status 805a or a low-priority MC status 805b. Additionally or alternatively, MC priority status 805 can be derived from a network, a social network, a subscription service, or the Internet, and/or copied from a previously-input list of media content. Any number of intermediate-priority MC statuses 805c is also possible, and in some aspects the MC priority status 805 may include a weighting factor or coefficient that fits within a wide range of potential priority statuses. The MC priority status 805 may be created or modified by a MC priority determination device such as, for example, the MC priority determination device 650.

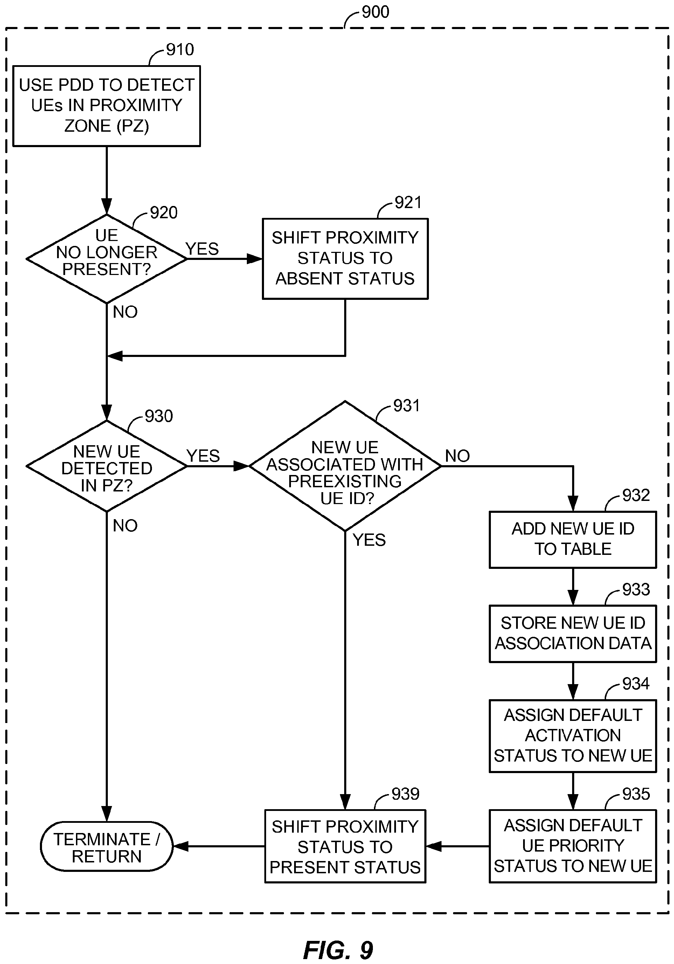

FIG. 9 generally illustrates a method 900 of determining proximity. The method 900 may be an implementation of the proximity determination 510 depicted in FIG. 5. The method 900 may be performed by a control device such as, for example, control device 610. At 910, the control device 610 utilizes a PDD, for example, the PDD 670 to determine the presence of UEs within a proximity zone, for example, proximity zone 671. In one scenario, the PDD 670 may affirmatively detect that the UE is either present in, or absent from, the proximity zone 671. In another possible scenario, the PDD 670 may attempt to ascertain that the UE is present in the proximity zone 671, and if the attempt fails, conclude that the UE is absent.

At 920, the control device 610 verifies that every UE ID 701 with a present status 704a is still within the proximity zone 671. If all UE IDs 701 having a present status 704a are determined to be within the proximity zone 671, then the method 900 proceeds directly to 930. Otherwise, the method 900 proceeds to 921, where the proximity status 704 of every UE 680 determined to be absent is shifted to an absent status 704b (as noted above, a temporarily absent status 704c is also possible, in which case a shift to the absent status 704b would be delayed or avoided). After 921 is complete, the method 900 proceeds to 930.

At 930, the control device 610 determines whether the PDD 670 has detected a UE 680 within the proximity zone 671 which is not associated with a present status 704a. If not, then the method 900 terminates or (if the method 900 is an implementation of the proximity determination 510 depicted in FIG. 5) returns to the method 500. Otherwise, the method 900 proceeds to 931.

At 931, the control device 610 utilizes UE identification data, for example, UE identification data 705, to determine whether the detected UE 680 is associated with a pre-existing UE ID 701. If so, the method 900 proceeds to 939, in which the proximity status 704 associated with the pre-existing UE ID 701 is shifted to a present status 704a. If not, the method proceeds to 932.

At 932, the control device may add a new UE ID 701 to account for the unrecognized UE 680 detected by the PDD 670. At 933, the control device may generate and store new UE identification data 705 that will enable the control device 610 to recognize an association between the unrecognized UE 680 and the newly-added UE ID 701 in the future. At 934 and 935, which are optional, the control device 610 will assign a default activation status 702 and a default UE priority status to the newly-added UE ID 701 associated with the unrecognized 680. The method 900 will then proceed to 939, in which the proximity status 704 associated with the new UE ID 701 is shifted to a present status 704a.

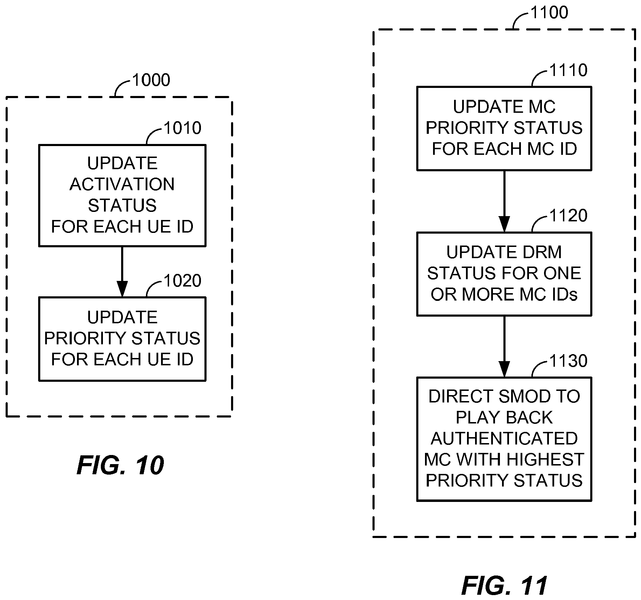

FIG. 10 generally illustrates a method 1000 of allocating access. The method 1000 may be an implementation of the access allocation 520 depicted in FIG. 5. At 1010, the control device 610 will update the activation status 702 of one or more UE IDs 701 in order to allocate greater access or lesser access to any particular UE. As noted in some of the aforementioned scenarios, the activation status 702 can be set to a default setting, updated manually, or triggered to shift upon the occurrence of a predetermined event such as acceptance of an invitation or validation by an administrator. Accordingly, at 1010, the control device 610 will determine if there has been a manual update or triggering occurrence and update one or more UE IDs 701 accordingly.

At 1020, the control device 610 will update the UE priority status 703 of one or more UE IDs 701. As noted in some of the aforementioned scenarios, the UE priority status 703 can be set to a default setting or updated manually. Accordingly, at 1020, the control device 610 will determine if there has been a manual update and update the one or more UE IDs 701 accordingly. Additionally or alternatively, the control device 610 may rely on a UE priority determination device such as, for example, UE priority determination device 630. The UE priority determination device 630 may be configured to generate a UE priority status 703 that includes a weighting factor or coefficient that fits within a wide range of potential priority statuses.

Factors that the UE priority determination device 630 might use to determine a UE priority status 703 include the following: random chance, as in a lottery; a round robin formula; a similarity between the media content preferences of UE and the media content preferences of other UEs; the number of followers associated with a UE on a social network; the length of time UE has been in a present status 704a; an arbitrary setting; by an administrator or other UE with high priority status; voting by other UEs, and/or weighted voting by other UEs, with votes being weighted in accordance with a UE priority status 703 associated with the voting UEs.

FIG. 11 generally illustrates a method 1100 of facilitating playback. The method 1100 may be an implementation of the playback facilitation 530 depicted in FIG. 5. The method 1100 may be performed by a control device such as, for example, control device 610. At 1110, the control device 610 will update the MC priority status 805 of one or more MC IDs 801. As noted in some of the aforementioned scenarios, the MC priority status 805 can be set to a default setting, updated manually, derived from a network, a social network, a subscription service, or the Internet, and/or copied from a previously-input list of media content. Accordingly, at 1110, the control device 610 will determine if an update is necessary and update the MC priority status 805 of the one or more MC IDs 801 accordingly. Additionally or alternatively, the control device 610 may rely on a MC priority determination device such as, for example, the MC priority determination device 650. The MC priority determination device 650 may be configured to generate a MC priority status 805 that includes a weighting factor or coefficient that fits within a wide range of potential priority statuses.

Factors that the MC priority determination device 650 might use to determine a MC priority status 805 include the following: an encoding technology of the MC (e.g., lossy versus lossless encoding); a bit rate of the MC; a sample rate of the MC; a similarity between the media content preferences associated with the media content and the media content preferences of the UEs having UE IDs (or the UEs having high priority status, or UEs having a present status, or any combination of the aforementioned); the length of time that the media content has been in a playback queue; the length of time required to complete playback of the media content; the number of times the media content has been requested; the number of requesting UEs that currently have a high priority status, active status, present status, or any of the above; and/or length of time since most recent playback. The MC priority determination device 650 may also determine the relative MC priority status 805 of different data files associated with the same MC. In one possible scenario, the MC priority determination device 650 recognizes two different files associated with the same MC, but assigns a higher MC priority status 805 to a data file with a higher sample rate.

At 1120, the control device 610 updates the DRM status 804 associated with one or more MC IDs 801. In some configurations, the MC IDs 801 with the highest MC priority status 805 are subjected to an update of the DRM status 804. This prevents needless updating of the DRM status 804 associated with media content that is not likely to be played back in the immediate future. In other configurations, the control device 610 updates the DRM status 804 every time there is a shift in the proximity status 704 associated with any UE ID 701.

At 1130, the control device 610 directs the SMOD 660 to play back the highest-priority authenticated media content, as indicated by the DRM status 804 and MC priority status 805 associated with the media content.

In one illustrative example, three guests associated with respective UE IDs 701 "1", "2", and "3" are determined to have an active status 702a and a present status 704a. Guest "1" is a high-priority user associated with a high-priority UE status 703a, whereas guests "2" and "3" are associated with a low-priority UE status 703b. Guest "1" requests media content associated with MC ID 801 "M1". Guest "2" requests media content associated with MC ID 801 "M2". Guest "3" also requests media content associated with MC ID 801 "M2" and further requests media content associated with MC ID "M3". In both cases, control device 610 obtains MC identification data 802 (represented as "YYYY[M1]", "YYYY[M2]", and "YYYY[M3]" respectively) in accordance with any method set forth in the present disclosure.

According to one possible scenario, media content "M1" is stored on the UE 680 associated with guest "1". The fact that media content "M1" is stored locally on the UE of guest "1" is incorporated into MC identification data "YYYY[M1]". The control device 610 also creates MC/UE association data 803 (represented as "ZZZZ[M1]") which identifies guest "1" as an authorized owner of media content "M1".

Moreover, media content "M2" can be acquired from a subscription service to which guest "2" has access. The location of streamable media content "M2" is incorporated into MC identification data "YYYY[M2]". Guest "2" further supplies, for example, login information, which enables the control device to stream media content from a subscription service associated with guest "2". This login information may be incorporated into MC/UE association data 803 (represented as "ZZZZ[M2]").

Finally, guest "3", who has no personal access to media content, seconds the request of guest "2" for media content "M2", and further requests media content "M3", which he ascertains to be available on the subscription service available to guest "2". For example, when guest "2" supplies login information to the control device 610, the control device 610 may make all the media content which is available via the subscription service browsable by one or more guests (e.g., guests with an active status 702a, high-priority UE status 703a, and/or a present status 704a). Once again, the location of the streamable media content "M3" is incorporated into MC identification data "YYYY[M3]". Moreover, the login information supplied by guest "2" is incorporated into MC/UE association data 803 (represented as "ZZZZ[M2]"). Table 10 reflects the scenario as it has thus far been described.

**Table 10**

| **MC ID** | **MC Identification Data** | **MC/UE Association Data** | **DRM Status** | **MC Priority Status** |
|---|---|---|---|---|
| **M1** | **YYYY[M1]** | **ZZZZ[M1]** | **N/A** | **N/A** |
| **M2** | **YYYY[M2]** | **ZZZZ[M2]** | **N/A** | **N/A** |
| **M3** | **YYYY[M3]** | **ZZZZ[M3]** | **N/A** | **N/A** |

In some configurations, the control device 610 will next ascertain the DRM status 804 associated with each requested unit of media content "M1", "M2", and "M3". With respect to "M1", the control device 610 uses data "ZZZZ[M1]" to ascertain that guest "1" (associated with UE ID "1") is authorized to play back media content "MC1". Control device 610 subsequently consults the UE data table 700 to ascertain the proximity status 704 associated with UE ID "1". If an absent status 704b were associated with UE ID "1", then the DRM status 804 associated with MC ID "1" will be set to a blocked status 804b. However, in this scenario, a present status 704a is associated with UE ID "1", and the DRM status 804 associated with MC ID "1" will be set to an authenticated status 804a.

With respect to "M2" and "M3", the control device 610 uses data "ZZZZ[M2]" and "ZZZZ[M3]" respectively to ascertain that guest "2" (associated with UE ID "2") is authorized to play back media content "MC2" and "MC3" via the subscription service. Control device 610 subsequently consults the UE data table 700 to ascertain the proximity status 704 associated with UE ID "2". In this scenario, a present status 704a is associated with UE ID "2", and the DRM status 804 associated with MC IDs "2" and "3" will be set to an authenticated status 804a. Table 11 reflects the scenario as it has thus far been described.

**Table 11**

| **MC ID** | **MC Identification Data** | **MC/UE Asso-ciation Data** | **DRM Status** | **MC Priority Status** |
|---|---|---|---|---|
| **M1** | **YYYY[M1]** | **ZZZZ[M1]** | **AUTHENTIC.** | **N/A** |
| **M2** | **YYYY[M2]** | **ZZZZ[M2]** | **AUTHENTIC.** | **N/A** |
| **M3** | **YYYY[M3]** | **ZZZZ[M3]** | **AUTHENTIC.** | **N/A** |

In some configurations, the control device 610 will only facilitate playback of media content if the control device 610 has authenticated user-specific digital ownership rights associated with the media content.

In some configurations, the control device 610 will next ascertain the MC priority status 805 associated with each requested unit of media content "M1", "M2", and "M3". The MC priority status 805 may be determined in accordance with any method set forth in the present disclosure. In the following example, the MC priority status 805 is denominated as a rank ordering "#1", "#2", "#3", etc., in which the highest ranked media content ("#1") is first in the playback queue. Moreover, the different factors that affect the MC priority status 805 are arbitrarily weighted for the purposes of illustration.

In the following scenario, media content "M2" has an MC priority status 805 of "#1" because the number of requests for media content "M2" (number of requests = 2) is greater than the number of requests for media content "M1" or "M3" (number of requests = 1). Moreover, media content "M1" is ranked higher than media content "M3" because media content "M1" was requested by guest "1", who is associated with a high-priority UE status 703a, whereas media content "M3" was requested by guest "3", who is associated with a low-priority UE status 703b. In another possible scenario, media content "M1" is ranked higher than media content "M3" because media content "M1" was requested by guest "1", who is associated with ownership and/or authorization of the media content "M1" he requested (as can be ascertained from MC/UE association data "ZZZZ[M1]" 803), whereas media content "M3" was requested by guest "3", who is not associated with ownership/authorization of the media content "M3" he requested (as can be ascertained from MC/UE association data "ZZZZ[M3]" 803). Table 12 reflects the scenario as it has thus far been described.

**Table 12**

| **MC ID** | **MC Identification Data** | **MC/UE Asso-ciation Data** | **DRM Status** | **MC Priority Status** |
|---|---|---|---|---|
| **M1** | **YYYY[M1]** | **ZZZZ[M1]** | **AUTHENTIC.** | **#2** |
| **M2** | **YYYY[M2]** | **ZZZZ[M2]** | **AUTHENTIC.** | **#1** |
| **M3** | **YYYY[M3]** | **ZZZZ[M3]** | **AUTHENTIC.** | **#3** |

In the previous example, the number of requests associated with a given unit of media content is weighted more heavily relative to the UE priority status 703 of the guest who requests a given unit of media content. However, the control device 610 is configurable such that any weighting system is possible.

In some configurations, once a certain number of units of media content have been prioritized, the control device 610 will begin facilitation of playback. In the scenario of Table 12, the control device 610 will first identify the MC ID 801 associated with a "#1" MC priority status, in this case, "M2". Next, it will ascertain the DRM status associated with media content "M2". If the DRM status 804 associated with media content "M2" is an authenticated status 804a, then the control device 610 may facilitate playback of the media content associated with MC ID "M2". In some scenarios, the MC/UE association data "ZZZZ[M2]" is relied upon to facilitate playback. For example, the control device 610 may derive a link to a media content stream from the MC/UE association data "ZZZZ[M2]" and utilize login information stored in the MC/UE association data "ZZZZ[M2]" to access the media content stream via a subscription service.

Moreover, once the control device 610 facilitates playback of media content "M2", this may affect the MC priority status 805 associated with media content "M2". This reflects the fact that once a request is granted, the MC priority status 805 associated with the requested media content should be lowered.

In the following example, the MC priority status 805 associated with media content "M2" is lowered in response to the fact that control device 610 has played back the media content "M2". Accordingly, the MC priority status 805 associated with the remainder of the requested media content ("M1" and "M3") is raised. Moreover, the PDD 670 has determined that guest "1" is no longer within the proximity zone 671, and the control device 610 accordingly sets the proximity status 704 associated with UE ID "1" to an absent status 704b. Table 13 reflects the scenario as it has thus far been described.

**Table 13**

| **MC ID** | **MC Identification Data** | **MC/UE Asso-ciation Data** | **DRM Status** | **MC Priority Status** |
|---|---|---|---|---|
| **M1** | **YYYY[M1]** | **ZZZZ[M1]** | **AUTHENTIC.** | **#1** |
| **M2** | **YYYY[M2]** | **ZZZZ[M2]** | **AUTHENTIC.** | **N/A** |
| **M3** | **YYYY[M3]** | **ZZZZ[M3]** | **AUTHENTIC.** | **#2** |

In this scenario, the control device 610 finishes the playback of media content "M2" and then consults the MC data table 800 to determine the next media content to be played back. In the scenario of Table 13, the control device 610 will first identify the MC ID 801 associated with a "#1" MC priority status, in this case, "M1". Next, it will ascertain the DRM status associated with media content "M1" by utilizing the MC/UE association data 803 associated with MC ID "M1" and the data stored in UE data table 700.

In some scenarios, the control device 610 may continually update the MC/UE association data 803 such that if any UE ID is associated with ownership/authorization of a specific unit of media content, the fact of the association is reflected in the MC/UE association data 803. For example, the control device 610 may recognize that the subscription service associated with guest "2" gives authorization for streaming of media content "M1". In this case, the MC/UE association data 803 would be updated to reflect the fact that not only guest "1" but guest "2" is authorized to play back the media content "M1". In another example, a new guest "4" arrives and UE ID "4" is added to the UE data table 700. The control device 610 may interrogate the UE associated with new guest "4" to determine if UE ID "4" is associated with ownership/authorization related to any of media content "M1", "M2", or "M3".

However, in the following scenario, the control device 610 utilizes MC/UE association data "ZZZZ[M1]" to ascertain that UE ID 701 (guest "1") is the only UE ID associated with media content "M1". In this example, MC/UE association data "ZZZZ[M1]" indicates that guest "1" (associated with UE ID "1") is the only guest associated with ownership/authorization of media content "M1". Therefore, control device 610 will consult the UE data table 700 to confirm that UE ID "1" is associated with a present status 704a. In this scenario, however, the PDD 670 has determined that the UE associated with UE ID "1" is no longer present, and the control device 610 has accordingly set the proximity status 704 associated with UE ID "1" to an absent status 704b. As a result, the control device 610 sets the DRM status 804 associated with MC ID "1" to a blocked status 804b. Table 14 reflects the scenario as it has thus far been described.

**Table 14**

| **MC ID** | **MC Identification Data** | **MC/UE Asso-ciation Data** | **DRM Status** | **MC Priority Status** |
|---|---|---|---|---|
| **M1** | **YYYY[M1]** | **ZZZZ[M1]** | **BLOCKED** | **#1** |
| **M2** | **YYYY[M2]** | **ZZZZ[M2]** | **AUTHENTIC.** | **N/A** |
| **M3** | **YYYY[M3]** | **ZZZZ[M3]** | **AUTHENTIC.** | **#2** |

In this scenario, the control device 610 will not play back the media content "M1". Instead, it will update the DRM status 804 associated with the next-highest ranked media content, i.e., media content "M3" which has an MC priority status of "#2". The control device then repeats the process of ascertaining the DRM status associated with media content "M3" by utilizing the MC/UE association data "ZZZZ[M3]" associated with MC ID "M3" and the data stored in UE data table 700.

As new media content requests are made, or additional UEs 680 enter the proximity zone 671, the control device 610 is configured to update the UE data table 700 and the MC data table 800. As a result, the control device 610 is able to facilitate playback on the SMOD 660 of media content with an authenticated status 804a and a high-priority MC status 805a.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The methods, sequences and/or algorithms described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal (e.g., UE). In the alternative, the processor and the storage medium may reside as discrete components in a user terminal.

In one or more exemplary embodiments, the functions described herein may be implemented in hardware, software, firmware, or any combination thereof. If implemented in software, the functions may be stored on or transmitted over as one or more instructions or code on a non-transitory computer-readable medium. Non-transitory computer-readable media includes both computer storage media and communication media including any medium that facilitates transfer of a computer program from one place to another. A storage media may be any available media that can be accessed by a computer. By way of example, and not limitation, such non-transitory computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a non-transitory computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of non-transitory computer-readable media.

While the foregoing disclosure shows illustrative embodiments of the invention, it should be noted that various changes and modifications could be made herein without departing from the scope of the invention as defined by the appended claims. The functions, steps and/or actions of the method claims in accordance with the embodiments of the invention described herein need not be performed in any particular order. Furthermore, although elements of the invention may be described or claimed in the singular, the plural is contemplated unless limitation to the singular is explicitly stated.

## Claims

1. A method of operating a control device (610), comprising:
determining (510) that a first user equipment (200) and a second user equipment (200) are in local proximity to a shared media output device;
allocating (520), to the first user equipment (200), access to the shared media output device (660), wherein the allocating access comprises queueing first media content that is associated with the first user equipment ; determining that both the first user equipment and second user equipment have user-specific digital ownership rights associated with the first media content; and
facilitating playback (530), on the shared media output device (660), of the first media content so long as either the first user equipment or the second user equipment is determined to be in local proximity to the shared media output device.

2. The method of claim 1, further comprising determining a priority status of the first user equipment, wherein greater access to the shared media output device is allocated to the first user equipment if the first user equipment is determined to have a high priority status.

3. The method of claim 1, wherein a proximity zone (671) partially overlaps with a media coverage zone (661) of the shared media output device (660).

4. The method of claim 1, wherein the media content is delivered to the shared media output device (660) by one or more of downloading requested media content from the first user equipment, downloading the requested media content from a cloud content service, streaming the requested media content from the first user equipment, or streaming the requested media content from a cloud content service.

5. The method of claim 1, further comprising:
allocating access to the shared media output device (660) among the first user equipment and the second user equipment; and
facilitating the playback of the media content associated with the first user equipment and the second user equipment on the shared media output device so long as the first user equipment and the second user equipment are determined to be in local proximity to the shared media output device (660).

6. The method of claim 5, further comprising determining a priority status of the first user equipment and the second user equipment, wherein greater access to the shared media output device is allocated to the first user equipment or the second user equipment based on the priority status of the first user equipment and the second user equipment.

7. The method of claim 1, wherein determining that both the first user equipment and second user equipment have user-specific digital ownership rights associated with the first media content comprises determining that both the first user equipment and the second user equipment are authorized user equipment that are independently authorized to play back the media content.

8. The method of claim 7, wherein a proximity zone (671) partially overlaps with a media coverage zone (661) of the shared media output device.

9. The method of claim 1,
wherein the control device (610) corresponds to the shared media output device, or
wherein the control device (610) corresponds to a proximate user equipment in proximity to the shared media output device, or
wherein the control device (610) corresponds to a remote server or a remote user equipment that is not proximate to the shared media output device.

10. The method of claim 1, wherein the facilitating includes:
playing the queued media content, or
streaming the queued media content to the shared media output device for playback, or
directing another device to stream the queued media content to the shared media output device for playback, or
sending a signal to the shared media output device that authorizes the playback of the queued media content.

11. The method of claim 1,
wherein the allocating allocates access to the shared media output device to one or more additional user equipments in addition to the first user equipment, and
wherein degrees to which the access is allocated between the first user equipment and the one or more additional user equipments is based on one or more allocation factors.

12. The method of claim 11, wherein the one or more allocation factors include relative user equipment priority and/or relative user equipment proximity status.

13. An apparatus for operating a control device (610), comprising:
means for determining that a first user equipment and a second user equipment are in local proximity to a shared media output device;
means for allocating, to the first user equipment, access to the shared media output device (660), wherein the allocating access comprises queueing first media content that is associated with the first user equipment;
means for determining that both the first user equipment and second user equipment have user-specific digital ownership rights associated with the first media content; and
means for facilitating playback, on the shared media output device (660), of the first media content so long as either the first user equipment or the second user equipment is determined to be in local proximity to the shared media output device (660).

14. The control device according to claim 13 wherein the means for determining comprises
a proximity determination device (670) configured to determine that the first user equipment and the second user equipment are in local proximity to the shared media output device; and wherein the means for allocating, means for determining and means for facilitating comprises
a user equipment priority determination device (630).

15. A non-transitory computer-readable medium comprising at least one instruction for causing a processor to perform processes for operating a control device (610), the non-transitory computer-readable medium comprising:
code which when executed implements the methods according to any of claims 1 to 13.

## Patentansprüche

1. Ein Verfahren zum Betreiben einer Steuereinrichtung (610), das Folgendes aufweist:
Bestimmen (510), dass sich eine erste Nutzereinrichtung (200) und eine zweite Nutzereinrichtung (200) in lokaler Nähe bzw. Proximität zu einer gemeinsam verwendeten Medienausgabeeinrichtung befinden;
Zuteilen (520), an die erste Nutzereinrichtung (200), von Zugriff auf die gemeinsam verwendete Medienausgabeeinrichtung (660), wobei das Zuteilen von Zugriff Anordnen von erstem Medieninhalt, der mit der ersten Nutzereinrichtung assoziiert ist, in einer Warteschlange aufweist;
Bestimmen, dass sowohl die erste Nutzereinrichtung als auch die zweite Nutzereinrichtung nutzerspezifische digitale Eigentumsrechte haben, die mit dem ersten Medieninhalt assoziiert sind; und
Ermöglichen eines Abspielens (530), auf der gemeinsam verwendeten Medienausgabeeinrichtung (660), des ersten Medieninhalts solange bestimmt wird, dass sich entweder die erste Nutzereinrichtung oder die zweite Nutzereinrichtung in lokaler Nähe zu der gemeinsam verwendeten Medienausgabeeinrichtung befindet.

2. Verfahren nach Anspruch 1, das weiter Bestimmen eines Prioritätsstatus der ersten Nutzereinrichtung aufweist, wobei der ersten Nutzereinrichtung größerer bzw. besserer Zugriff auf die gemeinsam verwendete Medienausgabeeinrichtung zugeteilt wird, wenn bestimmt wird, dass die erste Nutzereinrichtung einen hohen Prioritätsstatus hat.

3. Verfahren nach Anspruch 1, wobei sich eine Nahbereichszone (671) teilweise mit einer Medienabdeckungszone (661) der gemeinsam verwendeten Medienausgabeeinrichtung (660) überlappt.

4. Verfahren nach Anspruch 1, wobei der Medieninhalt an die gemeinsam verwendete Medienausgabeeinrichtung (660) durch ein oder mehreres von Folgendem geliefert wird: Herunterladen von angefragtem Medieninhalt von der ersten Nutzereinrichtung, Herunterladen des angefragten Medieninhalts von einem Cloud-Content-Service bzw. Cloud-Inhaltsdienst, Streamen des angefragten Medieninhalts von der ersten Nutzereinrichtung oder Streamen des angefragten Medieninhalts von einem Cloud-Inhaltsdienst.

5. Verfahren nach Anspruch 1, das weiter Folgendes aufweist:
Zuteilen von Zugriff auf die gemeinsam verwendete Medienausgabeeinrichtung (660) auf die erste Nutzereinrichtung und die zweite Nutzereinrichtung; und
Ermöglichen des Abspielens des Medieninhalts, der mit der ersten Nutzereinrichtung und der zweiten Nutzereinrichtung assoziiert ist, auf der gemeinsam verwendeten Medienausgabeeinrichtung solange bestimmt wird, dass sich die erste Nutzereinrichtung und die zweite Nutzereinrichtung in lokaler Nähe zu der gemeinsam verwendeten Medienausgabeeinrichtung (660) befinden.

6. Verfahren nach Anspruch 5, das weiter Bestimmen eines Prioritätsstatus der ersten Nutzereinrichtung und der zweiten Nutzereinrichtung aufweist, wobei der ersten Nutzereinrichtung oder der zweiten Nutzereinrichtung größerer Zugriff auf die gemeinsam verwendete Medienausgabeeinrichtung basierend auf dem Prioritätsstatus der ersten Nutzereinrichtung und der zweiten Nutzereinrichtung zugeteilt wird.

7. Verfahren nach Anspruch 1, wobei das Bestimmen, dass sowohl die erste Nutzereinrichtung als auch die zweite Nutzereinrichtung nutzerspezifische digitale Eigentumsrechte haben, die mit dem ersten Medieninhalt assoziiert sind, Bestimmen aufweist, dass sowohl die erste Nutzereinrichtung als auch die zweite Nutzereinrichtung autorisierte Nutzereinrichtungen sind, die unabhängig zum Abspielen des Medieninhalts autorisiert sind.

8. Verfahren nach Anspruch 7, wobei sich eine Nahbereichszone (671) teilweise mit einer Medienabdeckungszone (661) der gemeinsam verwendeten Medienausgabeeinrichtung überlappt.

9. Verfahren nach Anspruch 1,
wobei die Steuereinrichtung (610) der gemeinsam verwendeten Medienausgabeeinrichtung entspricht, oder
wobei die Steuereinrichtung (610) einer nahen Nutzereinrichtung in der Nähe der gemeinsam verwendeten Medienausgabeeinrichtung entspricht, oder wobei die Steuereinrichtung (610) einem Fernserver oder einer Fernnutzereinrichtung entspricht, die sich nicht in der Nähe der gemeinsam verwendeten Medienausgabeeinrichtung befindet.

10. Verfahren nach Anspruch 1, wobei das Ermöglichen Folgendes beinhaltet:
Abspielen des in Warteschlange befindlichen Medieninhalts, oder
Streamen des in Warteschlange befindlichen Medieninhalts an die gemeinsam verwendete Medienausgabeeinrichtung zum Abspielen, oder
Anweisen einer weiteren Einrichtung zum Streamen des in Warteschlange befindlichen Medieninhalts an die gemeinsam verwendete Medienausgabeeinrichtung zum Abspielen, oder
Senden eines Signals an die gemeinsam verwendete Medienausgabeeinrichtung, das das Abspielen des in Warteschlange befindlichen Medieninhalts autorisiert.

11. Verfahren nach Anspruch 1,
wobei das Zuteilen Zugriff auf die gemeinsam verwendete Medienausgabeeinrichtung an eine oder mehrere zusätzliche Nutzereinrichtungen zusätzlich zu der ersten Nutzereinrichtung zuteilt, und wobei Ausmaße, in denen Zugriff an die erste Nutzereinrichtung und die ein oder mehreren zusätzlichen Nutzereinrichtungen zugeteilt wird, auf einem oder mehreren Zuteilungsfaktoren basieren.

12. Verfahren nach Anspruch 11, wobei der eine oder die mehreren Zuteilungsfaktoren eine relative Nutzereinrichtungspriorität und/oder einen relativen Nutzereinrichtungsproximitäts- bzw. -nähestatus beinhalten.

13. Eine Vorrichtung zum Betreiben einer Steuereinrichtung (610), die Folgendes aufweist:
Mittel zum Bestimmen, dass sich eine erste Nutzereinrichtung und eine zweite Nutzereinrichtung in lokaler Nähe bzw. Proximität zu einer gemeinsam verwendeten Medienausgabeeinrichtung befinden;
Mittel zum Zuteilen, an die erste Nutzereinrichtung, von Zugriff auf die gemeinsam verwendete Medienausgabeeinrichtung (660), wobei das Zuteilen von Zugriff Anordnen von erstem Medieninhalt, der mit der ersten Nutzereinrichtung assoziiert ist, in einer Warteschlange aufweist;
Mittel zum Bestimmen, dass sowohl die erste Nutzereinrichtung als auch die zweite Nutzereinrichtung nutzerspezifische digitale Eigentumsrechte haben, die mit dem ersten Medieninhalt assoziiert sind; und
Mittel zum Ermöglichen eines Abspielens, auf der gemeinsam verwendeten Medienausgabeeinrichtung (660), des ersten Medieninhalts solange bestimmt wird, dass sich entweder die erste Nutzereinrichtung oder die zweite Nutzereinrichtung in lokaler Nähe zu der gemeinsam verwendeten Medienausgabeeinrichtung (660) befindet.

14. Steuereinrichtung nach Anspruch 13, wobei die Mittel zum Bestimmen Folgendes aufweisen:
eine Proximitäts- bzw. Nähebestimmungseinrichtung (670), die konfiguriert ist zum Bestimmen, dass sich die erste Nutzereinrichtung und die zweite Nutzereinrichtung in lokaler Nähe zu der gemeinsam verwendeten Medienausgabeeinrichtung befinden, und wobei die Mittel zum Zuteilen, die Mittel zum Bestimmen und die Mittel zum Ermöglichen Folgendes aufweisen:
eine Nutzereinrichtungsprioritätsbestimmungseinrichtung (630).

15. Ein nicht transitorisches computerlesbares Medium, das wenigstens einen Befehl bzw. eine Instruktion aufweist, um einen Prozessor zu veranlassen, Prozesse zum Betreiben einer Steuereinrichtung (610) durchzuführen, wobei das nicht transitorische computerlesbare Medium Folgendes aufweist:
Code, der, wenn er ausgeführt wird, die Verfahren nach einem der Ansprüche 1 bis 13 implementiert.

## Revendications

1. Procédé d'exploitation d'un dispositif de commande (610), comportant les étapes ci-dessous consistant à :
déterminer (510) qu'un premier équipement d'utilisateur (200) et un second équipement d'utilisateur (200) sont à proximité locale d'un dispositif de sortie de contenu multimédia partagé ;
attribuer (520), au premier équipement d'utilisateur (200), un accès au dispositif de sortie de contenu multimédia partagé (660), dans lequel l'étape d'attribution d'accès comporte l'étape consistant à mettre en file d'attente un premier contenu multimédia qui est associé au premier équipement d'utilisateur ;
déterminer que tant le premier équipement d'utilisateur que le second équipement d'utilisateur présentent des droits de propriété numérique spécifiques à l'utilisateur, associés au premier contenu multimédia ; et
faciliter la lecture (530), sur le dispositif de sortie de contenu multimédia partagé (660), du premier contenu multimédia, à condition qu'il soit déterminé que le premier équipement d'utilisateur ou le second équipement d'utilisateur est à proximité locale du dispositif de sortie de contenu multimédia partagé.

2. Procédé selon la revendication 1, comportant en outre l'étape consistant à déterminer un état de priorité du premier équipement d'utilisateur, dans lequel un meilleur accès au dispositif de sortie de contenu multimédia partagé est attribué au premier équipement d'utilisateur, s'il est déterminé que le premier équipement d'utilisateur présente un état de priorité élevée.

3. Procédé selon la revendication 1, dans lequel une zone de proximité (671) chevauche en partie une zone de couverture multimédia (661) du dispositif de sortie de contenu multimédia partagé (660).

4. Procédé selon la revendication 1, dans lequel le contenu multimédia est délivré au dispositif de sortie de contenu multimédia partagé (660) par une ou plusieurs méthodes parmi un téléchargement du contenu multimédia demandé à partir du premier équipement d'utilisateur, un téléchargement du contenu multimédia demandé à partir d'un service de contenu en nuage, une diffusion en continu du contenu multimédia demandé à partir du premier équipement d'utilisateur, ou une diffusion en continu du contenu multimédia demandé à partir d'un service de contenu en nuage.

5. Procédé selon la revendication 1, comportant en outre les étapes ci-dessous consistant à :
attribuer l'accès au dispositif de sortie de contenu multimédia partagé (660) parmi le premier équipement d'utilisateur et le second équipement d'utilisateur ; et
faciliter la lecture du contenu multimédia associé au premier équipement d'utilisateur et au second équipement d'utilisateur sur le dispositif de sortie de contenu multimédia partagé à condition qu'il soit déterminé que le premier équipement d'utilisateur et le second équipement d'utilisateur sont à proximité locale du dispositif de sortie de contenu multimédia partagé (660).

6. Procédé selon la revendication 5, comportant en outre l'étape consistant à déterminer un état de priorité du premier équipement d'utilisateur et du second équipement d'utilisateur, dans lequel un meilleur accès au dispositif de sortie de contenu multimédia partagé est attribué au premier équipement d'utilisateur ou au second équipement d'utilisateur sur la base de l'état de priorité du premier équipement d'utilisateur et du second équipement d'utilisateur.

7. Procédé selon la revendication 1, dans lequel l'étape consistant à déterminer que tant le premier équipement d'utilisateur que le second équipement d'utilisateur présentent des droits de propriété numérique spécifiques à l'utilisateur, associés au premier contenu multimédia, comprend l'étape consistant à déterminer que tant le premier équipement d'utilisateur que le second équipement d'utilisateur correspondent à des équipements d'utilisateur autorisés lesquels sont indépendamment autorisés à lire le contenu multimédia.

8. Procédé selon la revendication 7, dans lequel une zone de proximité (671) chevauche en partie une zone de couverture multimédia (661) du dispositif de sortie de contenu multimédia partagé.

9. Procédé selon la revendication 1,
dans lequel le dispositif de commande (610) correspond au dispositif de sortie de contenu multimédia partagé ; ou
dans lequel le dispositif de commande (610) correspond à un équipement d'utilisateur proche, situé à proximité du dispositif de sortie de contenu multimédia partagé ; ou
dans lequel le dispositif de commande (610) correspond à un serveur distant ou à un équipement d'utilisateur distant qui n'est pas à proximité du dispositif de sortie de contenu multimédia partagé.

10. Procédé selon la revendication 1, dans lequel l'étape de facilitation inclut les étapes ci-dessous consistant à :
lire le contenu multimédia mis en file d'attente ; ou
diffuser en continu le contenu multimédia mis en file d'attente, vers le dispositif de sortie de contenu multimédia partagé, à des fins de lecture ; ou
ordonner à un autre dispositif de diffuser en continu le contenu multimédia mis en file d'attente vers le dispositif de sortie de contenu multimédia partagé à des fins de lecture ; ou
envoyer un signal au dispositif de sortie de contenu multimédia partagé, lequel autorise la lecture du contenu multimédia mis en file d'attente.

11. Procédé selon la revendication 1,
dans lequel l'étape d'attribution attribue l'accès au dispositif de sortie de contenu multimédia partagé à un ou plusieurs équipements d'utilisateur supplémentaires, outre le premier équipement d'utilisateur ; et
dans lequel la mesure dans laquelle l'accès est attribué entre le premier équipement d'utilisateur et ledit un ou lesdits plusieurs équipements d'utilisateur supplémentaires est basée sur un ou plusieurs facteurs d'attribution.

12. Procédé selon la revendication 11, dans lequel ledit un ou lesdits plusieurs facteurs d'attribution incluent une priorité relative d'équipement d'utilisateur et/ou un état de proximité relatif d'équipement d'utilisateur.

13. Appareil destiné à faire fonctionner un dispositif de commande (610), comportant :
un moyen pour déterminer qu'un premier équipement d'utilisateur et un second équipement d'utilisateur sont à proximité locale d'un dispositif de sortie de contenu multimédia partagé ;
un moyen pour attribuer, au premier équipement d'utilisateur, un accès au dispositif de sortie de contenu multimédia partagé (660), dans lequel l'étape d'attribution d'accès comporte l'étape consistant à mettre en file d'attente un premier contenu multimédia qui est associé au premier équipement d'utilisateur ;
un moyen pour déterminer que tant le premier équipement d'utilisateur que le second équipement d'utilisateur présentent des droits de propriété numérique spécifiques à l'utilisateur, associés au premier contenu multimédia ; et
un moyen pour faciliter la lecture, sur le dispositif de sortie de contenu multimédia partagé (660), du premier contenu multimédia, à condition qu'il soit déterminé que le premier équipement d'utilisateur ou le second équipement d'utilisateur est à proximité locale du dispositif de sortie de contenu multimédia partagé (660).

14. Dispositif de commande selon la revendication 13, dans lequel le moyen de détermination comporte :
un dispositif de détermination de proximité (670) configuré de manière à déterminer que le premier équipement d'utilisateur et le second équipement d'utilisateur sont à proximité locale du dispositif de sortie de contenu multimédia partagé ; et dans lequel le moyen d'attribution, le moyen de détermination et le moyen de facilitation comportent :
un dispositif de détermination de priorité d'équipement d'utilisateur (630).

15. Support non transitoire lisible par ordinateur comportant au moins une instruction pour amener un processeur à mettre en oeuvre des processus destinés à faire fonctionner un dispositif de commande (610), le support non transitoire lisible par ordinateur comportant :
un code, qui, lorsqu'il est exécuté, met en oeuvre les procédés selon l'une quelconque des revendications 1 à 13.
